# EUROPEAN PATENT APPLICATION

(11) **EP 4 753 272 A1**
(43) Date of publication of application: **03.06.2026**
(21) Application number: 24884115.7
(22) Date of filing: 12.08.2024
(51) Int. Cl.: H04N 21/81

(54) **METHOD FOR CHANGING BACKGROUND MUSIC, ELECTRONIC DEVICE, AND STORAGE MEDIUM**

(30) Priority: 03.11.2023 CN 202311465355; 28.12.2023 CN 202311852130
(71) Applicant: Honor Device Co., Ltd., Shenzhen, Guangdong 518040 (CN)
(72) Inventor: LUO, Lan, Shenzhen, Guangdong 518040 (CN); WANG, Di, Shenzhen, Guangdong 518040 (CN)
(74) Representative: Isarpatent
(86) International application number: PCT/CN2024/111561
(87) International publication number: WO 2025/092108

(57) **Abstract**

Embodiments of this application relate to the field of terminal technologies, and in particular, to a background music replacement method, an electronic device, and a storage medium. In the method, the electronic device may perform replacement with different background music such as second background music and third background music for a to-be-cut video in response to a selection operation on a second music option. In addition, the electronic device may further perform replacement with fixed background music such as first background music for the to-be-cut video in response to a selection operation on a first music option. In other words, the electronic device may switch to diversified background music for the to-be-cut video by using the second music option. Therefore, the electronic device can provide diversified background music for cutting. In this way, in a process in which a user performs cutting by using the electronic device, the user can flexibly switch to diversified background music for the to-be-cut video by using the second music option, so that the user obtains better use experience.

## Description

This application claims priority to Chinese Patent Application No. 202311465355.3, filed with the China National Intellectual Property Administration on November 3, 2023 and entitled "LARGE MODEL-BASED VIDEO PRODUCTION METHOD", and claims priority to Chinese Patent Application No. 202311852130.3, filed with the China National Intellectual Property Administration on December 28, 2023 and entitled "BACKGROUND MUSIC REPLACEMENT METHOD, ELECTRONIC DEVICE, AND STORAGE MEDIUM", both of which are incorporated herein by reference in their entireties.

### TECHNICAL FIELD

Embodiments of this application relate to the field of terminal technologies, and in particular, to a background music replacement method, an electronic device, and a storage medium.

### BACKGROUND

With development of terminal technologies, an electronic device is used more frequently by a user, and the user performs photographing by using the electronic device. After the electronic device obtains a photographed image through photographing, the electronic device may generate a video based on the photographed image, cut the video, for example, add background music to the video, add a motion effect, and add a text, and generate a cut video.

Currently, in a process in which the user performs cutting by using the electronic device, background music provided by the electronic device is relatively fixed, and diversified background music cannot be provided for cutting.

### SUMMARY

Embodiments of this application provide a background music replacement method, an electronic device, and a storage medium, to provide diversified background music for cutting, thereby improving use experience of a user.

To achieve the foregoing objective, the following technical solutions are used in the embodiments of this application.

According to a first aspect, an embodiment of this application provides a background music replacement method. The method may be applied to an electronic device. The electronic device may be an electronic device, for example, a mobile phone or a tablet computer, having an image display capability. In the method, the electronic device displays a first cutting interface, and the electronic device plays a to-be-cut video with first background music in the first cutting interface. The first cutting interface further includes a music control. Then the electronic device displays a second cutting interface in response to a first trigger operation on the music control. The second cutting interface includes a first music option and a second music option, and the first music option indicates the first background music. In a process in which the electronic device displays the second cutting interface, the electronic device plays the to-be-cut video with second background music in response to a selection operation on the second music option, the electronic device plays the to-be-cut video with the first background music in response to a selection operation on the first music option, and the electronic device plays the to-be-cut video with third background music in response to the selection operation on the second music option. The third background music is different from the second background music.

In the method, the electronic device may perform replacement with different background music such as the second background music and the third background music for the to-be-cut video in response to the selection operation on the second music option. In addition, the electronic device may further perform replacement with fixed background music such as the first background music for the to-be-cut video in response to the selection operation on the first music option. In other words, the electronic device may switch to diversified background music for the to-be-cut video by using the second music option. Therefore, the electronic device can provide diversified background music for cutting. In this way, in a process in which a user performs cutting by using the electronic device, the user can flexibly switch to diversified background music for the to-be-cut video by using the second music option, so that the user obtains better use experience.

In a possible design of the first aspect, that the electronic device plays the to-be-cut video with third background music in response to the selection operation on the second music option includes: after the electronic device plays the to-be-cut video with the second background music, when a quantity of times of switching background music by the electronic device in response to the selection operation on the second music option is less than a first quantity, the electronic device plays the to-be-cut video with the third background music in response to the selection operation on the second music option.

In this design, the electronic device may change, based on a quantity of times of performing the selection operation on the second music option, background music to which switching is performed by using the selection operation on the second music option. It can be learned that the electronic device can provide diversified background music for cutting.

In another possible design of the first aspect, the method further includes: after the electronic device plays the to-be-cut video with the second background music, when the quantity of times of switching background music by the electronic device in response to the selection operation on the second music option is greater than or equal to the first quantity, the electronic device plays the to-be-cut video with the second background music in response to the selection operation on the second music option.

In this design, the electronic device may switch background music of the to-be-cut video back to previous background music such as the second background music based on the quantity of times of performing the selection operation on the second music option. It can be learned that the electronic device can provide diversified background music for cutting.

In another possible design of the first aspect, the playing the to-be-cut video with second background music in response to a selection operation on the second music option includes: when the electronic device meets a first condition, the electronic device plays the to-be-cut video with the second background music in response to the selection operation on the second music option. The first condition includes: the electronic device is connected to a network; or the first condition includes: the electronic device is disconnected from the network, and the quantity of times of switching background music in response to the selection operation on the second music option reaches the first quantity.

In this design, the electronic device may play the to-be-cut video with the second background music based on a network status. In other words, the electronic device may provide diversified background music for cutting.

In another possible design of the first aspect, that the electronic device plays the to-be-cut video with second background music in response to a selection operation on the second music option includes: when the electronic device is disconnected from the network, and the quantity of times of switching background music in response to the selection operation on the second music option is less than the first quantity, the electronic device displays a network connection prompt in response to the selection operation on the second music option; then the electronic device establishes a network connection in response to a network connection operation; and after the electronic device is connected to the network, the electronic device displays the second cutting interface, and plays the to-be-cut video with the second background music in the second cutting interface.

In still another possible design of the first aspect, after the electronic device displays the network connection prompt, the method further includes: the electronic device plays the to-be-cut video with the first background music in the second cutting interface in response to an operation of determining not to connect to the network.

In this design, the electronic device may play the to-be-cut video with the first background music or the to-be-cut video with the second background music based on the network status of the electronic device. It can be learned that the electronic device can flexibly replace background music for the to-be-cut video based on the network status, and the electronic device can provide diversified background music for cutting.

In another possible design of the first aspect, the second cutting interface further includes a first back control. After the to-be-cut video with the third background music is played in response to the selection operation on the second music option, the method further includes: in response to a second trigger operation on the first back control, the electronic device displays the first cutting interface, and plays the to-be-cut video with the first background music in the first cutting interface; and then, in response to a third trigger operation on the music control, the electronic device displays the second cutting interface, and plays the to-be-cut video with the first background music in the second cutting interface.

In this design, the electronic device may not save a background music replacement of the to-be-cut video in response to the trigger operation on the first back control.

In still another possible design of the first aspect, the second cutting interface further includes a saving control. After the electronic device plays the to-be-cut video with the third background music in response to the selection operation on the second music option, the method further includes: in response to a fourth trigger operation on the saving control, the electronic displays the first cutting interface, and plays the to-be-cut video with the third background music in the first cutting interface; and then, in response to a fifth trigger operation on the music control, the electronic device displays the second cutting interface, and plays the to-be-cut video with the third background music in the second cutting interface

In this design, the electronic device may save a background music replacement of the to-be-cut video in response to the trigger operation on the saving control.

In another possible design of the first aspect, the first cutting interface further includes a second back control. After the electronic device displays the first cutting interface in response to the second trigger operation on the first back control, the method further includes: the electronic device displays a third interface in response to a sixth trigger operation on the second back control, where the third interface includes a cutting entry of the to-be-cut video; and then, in response to a seventh trigger operation on the cutting entry, the electronic device displays the first cutting interface, and plays the to-be-cut video with the first background music in the first cutting interface.

In still another possible design of the first aspect, the electronic device includes an agreement toggle. That the electronic device plays the to-be-cut video with second background music in response to a selection operation on the second music option includes: when the agreement toggle is enabled, the electronic device plays the to-be-cut video with the second background music in response to the selection operation on the second music option.

In another possible design of the first aspect, the playing the to-be-cut video with second background music in response to a selection operation on the second music option includes: when the agreement toggle is disabled, in response to the selection operation on the second music option, the electronic device displays a prompt for enabling the agreement toggle; then the electronic device enables the agreement toggle in response to an operation of enabling the agreement toggle; and after the agreement toggle is enabled, the electronic device displays the second cutting interface, and plays the to-be-cut video with the second background music in the second cutting interface.

In still another possible design of the first aspect, after the prompt for enabling the agreement toggle is displayed, the method further includes: the electronic device plays the to-be-cut video with the first background music in the second editing interface in response to an operation of determining not to enable the agreement toggle.

In another possible design of the first aspect, the electronic device includes an agreement toggle. That the electronic device plays the to-be-cut video with second background music in response to a selection operation on the second music option may include: when the electronic device meets a second condition, in response to the selection operation on the second music option, the electronic device displays a prompt for enabling the agreement toggle; then the electronic device enables the agreement toggle in response to an operation of enabling the agreement toggle; the electronic device displays a network connection prompt after the agreement toggle is enabled; the electronic device establishes a network connection in response to a network connection operation; and after the electronic device is connected to the network, the electronic device displays the second cutting interface, and plays the to-be-cut video with the second background music in the second cutting interface. The second condition includes: the electronic device is disconnected from the network, and the agreement toggle is not enabled.

In this design, under the second condition, the electronic device first displays the prompt for enabling the agreement toggle, and then displays the network connection prompt. This can conform to operation logic of the user to some extent, and can improve use experience of the user.

In still another possible design of the first aspect, the second cutting interface further includes a saving control. After the electronic device plays the to-be-cut video with the third background music in response to the selection operation on the second music option, the method further includes: the electronic device displays the first cutting interface in response to an eighth trigger operation on the saving control, where the first cutting interface further includes a first editing control; then the electronic device displays a third cutting interface in response to a ninth trigger operation on the first editing control, and plays the to-be-cut video with the third background music and an audio track of the third background music in the third cutting interface, where the third cutting interface includes a third music option; and then, in response to a selection operation on the third music option, the electronic device plays the to-be-cut video with the third background music and the second background music, and displays an audio track of the second background music in the third cutting interface.

In this design, the electronic device may set the background music of the to-be-cut video to a plurality of pieces of diversified background music such as the second background music and the third background music in the third cutting interface. In this way, the electronic device can provide diversified background music for cutting.

In another possible design of the first aspect, that the electronic device plays the to-be-cut video with second background music in response to a selection operation on the second music option includes: in response to the selection operation on the second music option, the electronic device displays a first music cover and/or a first music name in the second music option, and plays the to-be-cut video with the second background music, where the first music cover and/or the first music name indicate or indicates the second background music. That the electronic device plays the to-be-cut video with third background music in response to the selection operation on the second music option includes: in response to the selection operation on the second music option, the electronic device displays a second music cover and/or a second music name in the second music option, and plays the to-be-cut video with the third background music, where the second music cover and/or the second music name indicate or indicates the third background music.

In this design, the electronic device may enable, by using the music cover or the music name, the user to visually perceive switching of the background music of the to-be-cut video relatively intuitively.

According to a second aspect, an electronic device is provided. The electronic device includes a memory and one or more processors. The memory is coupled to the processor. The memory stores computer program code, the computer program code includes computer instructions, and when the computer instructions are executed by the processor, the electronic device is enabled to perform the method provided in any one of the first aspect and the possible designs of the first aspect.

According to a third aspect, a computer-readable storage medium is provided. The computer-readable storage medium includes computer instructions. When the computer instructions are run on an electronic device, the electronic device is enabled to perform the method provided in any one of the first aspect and the possible designs of the first aspect.

According to a fourth aspect, a computer program product including instructions is provided. When the computer program product runs on an electronic device, the electronic device is enabled to perform the method provided in any one of the first aspect and the possible designs of the first aspect.

For technical effects brought by any design manner of the second aspect to the fourth aspect, refer to the technical effects brought by different design manners of the first aspect. Details are not described herein again.

### BRIEF DESCRIPTION OF DRAWINGS

FIG. 1 is a schematic diagram of a use scenario according to an embodiment of this application;
FIG. 2 is a schematic diagram of a hardware structure of an electronic device according to an embodiment of this application;
FIG. 3 is a schematic diagram of a software architecture according to an embodiment of this application;
FIG. 4 is a schematic flowchart of a background music replacement method according to an embodiment of this application;
FIG. 5 is a schematic flowchart of a cutting material generation process according to an embodiment of this application;
FIG. 6A, FIG. 6B, FIG. 6C, and FIG. 6D are a schematic diagram of a group of interfaces according to an embodiment of this application;
FIG. 7 is a schematic diagram of an interface according to an embodiment of this application;
FIG. 8A and FIG. 8B are a schematic diagram of another group of interfaces according to an embodiment of this application;
FIG. 9A and FIG. 9B are a schematic diagram of another group of interfaces according to an embodiment of this application;
FIG. 10A, FIG. 10B, FIG. 10C, and FIG. 10D are a schematic diagram of another group of interfaces according to an embodiment of this application;
FIG. 11A and FIG. 11B are a schematic diagram of another group of interfaces according to an embodiment of this application;
FIG. 12A, FIG. 12B, and FIG. 12C are a schematic diagram of another group of interfaces according to an embodiment of this application;
FIG. 13A, FIG. 13B, FIG. 13C, and FIG. 13D are a schematic diagram of another group of interfaces according to an embodiment of this application;
FIG. 14A, FIG. 14B, and FIG. 14C are a schematic diagram of another group of interfaces according to an embodiment of this application;
FIG. 15A, FIG. 15B, and FIG. 15C are a schematic diagram of another group of interfaces according to an embodiment of this application;
FIG. 16A, FIG. 16B, FIG. 16C, and FIG. 16D are a schematic diagram of another group of interfaces according to an embodiment of this application;
FIG. 17A and FIG. 17B are a schematic diagram of another group of interfaces according to an embodiment of this application; and
FIG. 18 is a schematic diagram of a structure of an electronic device according to an embodiment of this application.

### DESCRIPTION OF EMBODIMENTS

The following describes technical solutions in embodiments of this application with reference to the accompanying drawings in the embodiments of this application. In the descriptions of this application, unless otherwise specified, the character "/" indicates an "or" relationship between associated objects. For example, A/B may represent A or B. The term "and/or" in this application is merely an association relationship for describing associated objects and represents that three relationships may exist. For example, A and/or B may represent the following three cases: Only A exists, both A and B exist, and only B exists, where A and B may be singular or plural. In addition, in the descriptions of the embodiments of this application, unless otherwise specified, "a plurality of" means two or more. "At least one of the following items" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural. In addition, for ease of clearly describing the technical solutions in the embodiments of this application, in the embodiments of this application, words such as "first" and "second" are used to distinguish between same items or similar items whose functions and roles are basically the same. A person skilled in the art may understand that the words such as "first" and "second" do not limit a quantity or an execution sequence, and the words such as "first" and "second" do not define a definite difference.

In addition, in the embodiments of this application, words such as "example" or "for example" are used to represent giving an example, an illustration, or a description. Any embodiment or design solution described as "example" or "for example" in the embodiments of this application should not be construed as being more preferred or advantageous than other embodiments or design solutions. Exactly, use of the words such as "example" or "for example" is intended to present related concepts in a specific manner for ease of understanding.

In the technical solutions disclosed in this application, handling such as collection, storage, use, processing, transmission, provision, and disclosure of personal information of a user is in compliance with provisions of related laws and regulations, and does not violate public order and good morals.

With development of terminal technologies, an electronic device is used more frequently by a user, and the user performs photographing by using the electronic device. After the electronic device obtains a photographed image through photographing, the electronic device may perform audio/video cutting on the photographed image, for example, compositing a plurality of photos into a video, adding background music, adding a motion effect, adding a text, and combining a photo and a video. The photographed image includes a photo and/or a video. It may be understood that in actual use, the audio/video cutting may further have more functions, and may be specifically set based on an actual use requirement. For ease of the following descriptions, the audio/video cutting may be referred to as cutting.

In some solutions, in a process in which the user performs cutting by using the electronic device, the electronic device can provide only relatively fixed background music.

For example, the electronic device may be preconfigured with a background music library, and a corresponding music control is configured for each piece of background music in the background music library. In response to a trigger operation on a music control, the electronic device may set background music corresponding to the music control in the background music library as background music of a video. Because the background music in the background music library is relatively fixed and relatively undiversified, the electronic device cannot provide diversified background music for cutting.

In view of this, the embodiments of this application provide a background music replacement method. In the method, an electronic device may provide, by using one music control, a plurality of pieces of different background music for use by a user. In other words, the user may select different background music by using the music control. Because the electronic device can provide a plurality of different background music by using one music control, the electronic device can provide diversified background music for cutting.

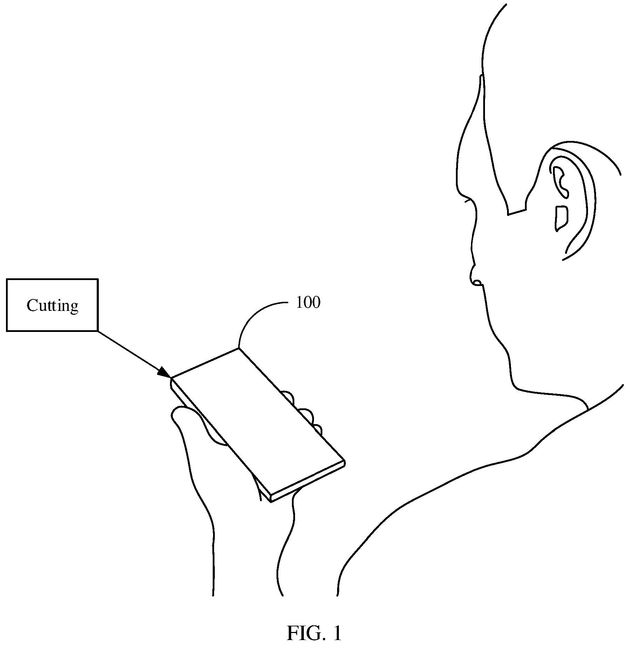

For example, as shown in FIG. 1, the technical solutions provided in the embodiments of this application may be applied to a process in which a user performs cutting by using an electronic device 100, and are particularly applicable to a process in which the user cuts a cutting material generated by using a "highlights" function of the electronic device. The "highlights" function of the electronic device can search an album for a photographed image based on a time or a place of photo photographing/video shooting, and obtain a cutting material based on the photographed image.

The electronic device 100 may also be referred to as a terminal (terminal), a terminal device, user equipment (user equipment, UE), a mobile station (mobile station, MS), a mobile terminal (mobile terminal, MT), or the like. The electronic device 100 may be an electronic device with a display screen, for example, a mobile phone, a tablet computer, a wearable device, a smart screen, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA); may be a vehicle-mounted device with a display screen, for example, a vehicle-mounted computer or an in-vehicle computer; or may be an internet of things device with a display screen, for example, a smartwatch or a smart band. A product form of the electronic device is not limited in the embodiments of this application.

The following describes a hardware structure and a software architecture of the electronic device provided in the embodiments of this application.

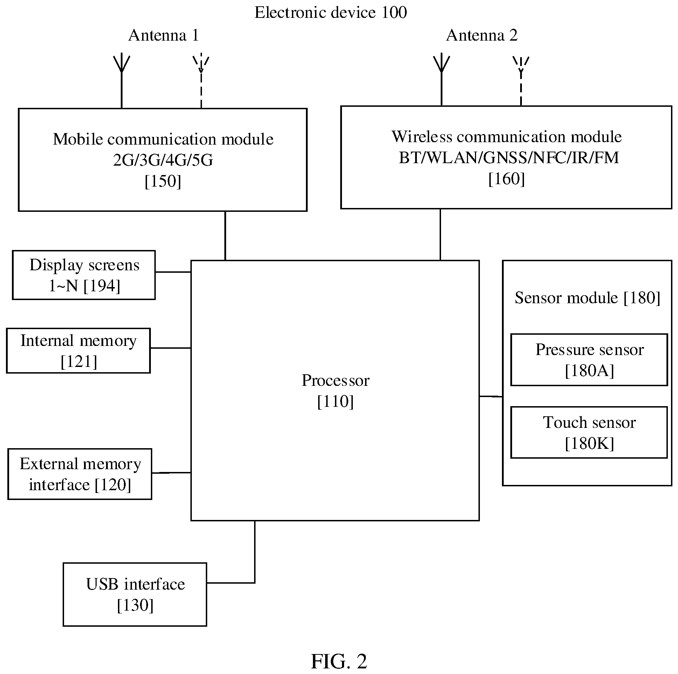

FIG. 2 is a schematic diagram of a hardware structure of an electronic device 100. The electronic device 100 may include a processor 110, an external memory interface 120, an internal memory 121, a universal serial bus (universal serial bus, USB) interface 130, an antenna 1, an antenna 2, a mobile communication module 150, a wireless communication module 160, a display screen 194, a subscriber identity module (subscriber identification module, SIM) card interface 195, and the like. The sensor module 180 may include a pressure sensor 180A, a touch sensor 180K, and the like.

It may be understood that the structure illustrated in this embodiment of this application constitutes no specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect the processor 110 to peripheral devices such as the display screen 194 and a camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the electronic device 100. The processor 110 communicates with the display screen 194 by using the DSI interface, to implement a display function of the electronic device 100.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

The USB interface 130 is an interface that complies with USB standard specifications, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device, or may be configured to connect to a headset to play audio through the headset. The interface may alternatively be configured to connect to another electronic device, for example, an AR device.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), and the like. In some embodiments, the electronic device 100 may include one or N display screens 194, where N is a positive integer greater than 1.

The pressure sensor 180A is configured to sense a pressure signal, and may convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates having a conductive material. When a force is applied onto the pressure sensor 180A, a capacitance between electrodes changes. The electronic device 100 determines intensity of pressure based on a change of the capacitance. When a touch operation is performed on the display screen 194, the electronic device 100 detects intensity of the touch operation based on the pressure sensor 180A. The electronic device 100 may also calculate a touch location based on a detected signal of the pressure sensor 180A. In some embodiments, touch operations performed at a same touch location but having different touch operation intensity may correspond to different operation instructions. For example, when a touch operation whose touch operation intensity is less than a first pressure threshold is performed on a Messages application icon, an instruction for viewing an SMS message is executed. When a touch operation whose touch operation strength is greater than or equal to the first pressure threshold is performed on the "Messages" application icon, an instruction for creating a new SMS message is executed.

The touch sensor 180K is also referred to as a "touch panel". The touch sensor 180K may be disposed on the display screen 194. The touch sensor 180K and the display screen 194 constitute a touchscreen, which is also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display screen 194. In some other embodiments, the touch sensor 180K may alternatively be disposed on a surface of the electronic device 100, at a position different from that of the display screen 194.

The external memory interface 120 may be configured to connect an external memory card, for example, a Micro SD card, to expand a storage capacity of the electronic device 100. The external memory card communicates with the processor 110 by using the external memory interface 120, to implement a data storage function, for example, to store files such as music and videos in the external memory card.

The internal memory 121 may be configured to store computer-executable program code, and the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS).

In some embodiments, in the electronic device 100, the antenna 1 is coupled to the mobile communication module 150, and the antenna 2 is coupled to the wireless communication module 160, so that the electronic device 100 can communicate with another device by using a wireless communication technology and a network.

For example, the electronic device 100 may obtain, by using the antenna 1 and the mobile communication module 150 or by using the antenna 2 and the wireless communication module 160, a cutting material generated by the another device.

The following describes a software architecture of the electronic device 100. A software system of the electronic device 100 may use a layered architecture, an event-driven architecture, a microkernel architecture, a microservice architecture, or a cloud architecture. In this embodiment of this application, an Android system with a layered architecture is used as an example to describe the software structure of the electronic device 100.

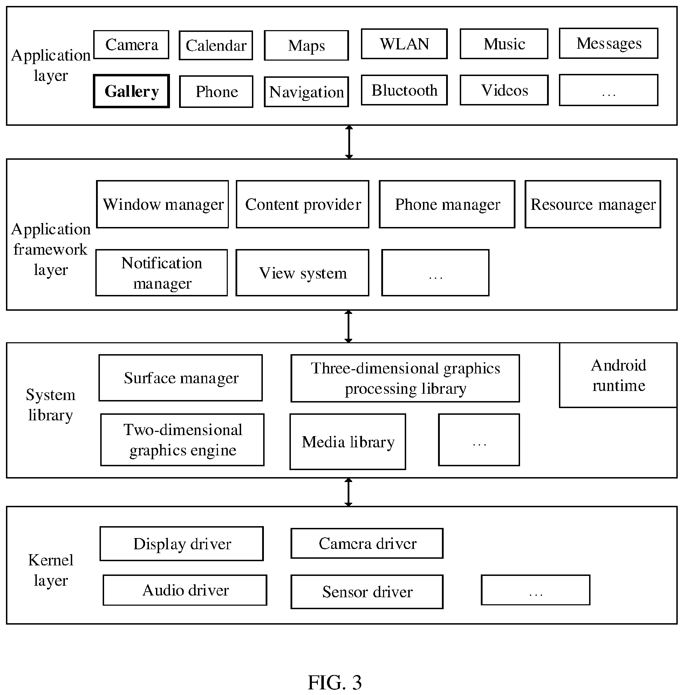

FIG. 3 is a schematic diagram of a software structure of an electronic device 100 according to an embodiment of this application. In the layered architecture, software is divided into several layers, and each layer has a clear role and task. Layers communicate with each other through a software interface. In some embodiments, the Android system is divided into four layers: an application layer, an application framework layer, an Android runtime (Android runtime) and system library, and a kernel layer from top to down.

The application layer may include a series of application packages.

As shown in FIG. 3, the application packages may include applications such as Camera, Gallery, Calendar, Phone, Maps, Navigation, WLAN, Bluetooth, Music, Videos, and Messages.

Gallery is configured to provide functions, for example, viewing a photo and a video, generating a cutting material, and cutting the cutting material.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display screen, determine whether a status bar exists, lock a screen, capture a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls such as a text display control and a picture display control. The view system may be configured to build an application. The display interface may include one or more views. For example, a display interface including an SMS message notification icon may include a view for displaying a text and a view for displaying a picture.

The phone manager is configured to provide a communication function for the electronic device 100, for example, call status management (including answering, hanging up, and the like).

The resource manager provides various resources for an application, for example, a localized string, an icon, a picture, a layout file, and a video file.

The notification manager enables the application to display notification information in the status bar, and may be configured to convey a notification-type message. The displayed notification information may automatically disappear after a short pause without a need to perform user interaction. For example, the notification manager is configured to provide a notification of download completion, a message reminder, and the like. The notification manager may alternatively be a notification that appears in a top status bar of a system in a form of a graph or scroll bar text, for example, a notification of an application running in the background, or a notification that appears on a screen in a form of a dialog window. For example, text information is prompted in the status bar, an alert sound is made, the electronic device vibrates, or an indicator light blinks.

The Android Runtime includes a kernel library and a virtual machine. The Android runtime is responsible for scheduling and management of the Android system.

The kernel library includes two parts: one part is a functional function that needs to be invoked by a java language, and the other part is a kernel library of Android.

The application layer and the application framework layer run on the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, an SGL).

The surface manager is configured to manage a display subsystem, and provide fusion of 2D and 3D layers for a plurality of applications.

The media library supports playback and recording in a plurality of common audio and video formats, a still image file, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D graphics drawing.

The kernel layer is a layer between hardware and software. The kernel layer includes at least a display driver, a camera driver, an audio driver, and a sensor driver.

The following describes a background music replacement method provided in the embodiments of this application by using an example in which an electronic device is a mobile phone and the mobile phone has the hardware structure shown in FIG. 2 and the software architecture shown in FIG. 3.

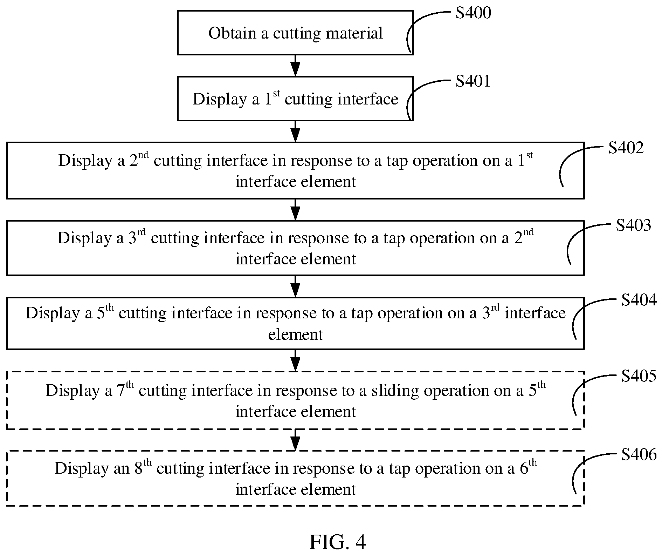

For example, with reference to FIG. 4, the background music replacement method provided in the embodiments of this application may include steps S400-S404.

S400: The mobile phone obtains a cutting material.

In a possible implementation, the mobile phone may generate the cutting material based on a photographing time and a photographing place of a photo or a video. In some embodiments, the cutting material may also be referred to as "highlights", "magic moment", or a to-be-cut video.

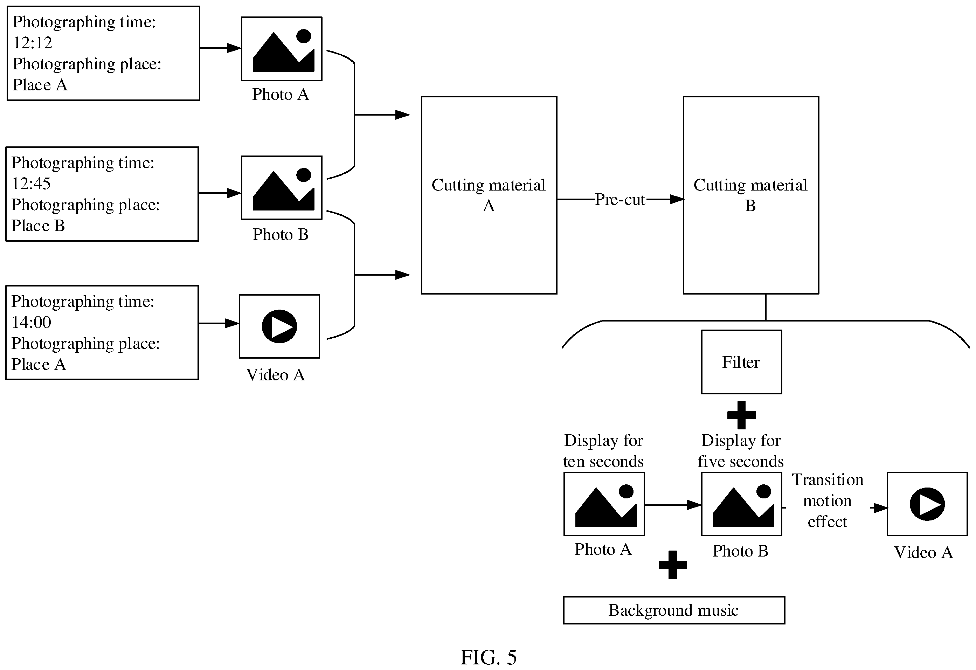

For example, with reference to FIG. 5, a photographing time of a photo A is relatively close to a photographing time of a photo B. For example, if a time difference between the photographing time of the photo A and the photographing time of the photo B is less than or equal to a preset duration threshold 1, the photo A and the photo B are added to a cutting material A. A photographing place of the photo B is relatively close to a photographing place of a video A. If a distance between the photographing place of the photo B and the photographing place of the video A is less than or equal to a preset distance threshold 1, the photo B and the video A are added to the cutting material A. The duration threshold 1 may be one hour, two hours, four hours, or the like. The distance threshold 1 may be 1 km, 2 km, 4 km, or the like. Specifically, the duration threshold 1 and the distance threshold 2 may be set based on an actual use requirement. This is not limited in this embodiment of this application.

In another possible implementation, after the mobile phone obtains the cutting material by searching an album, the mobile phone may further pre-cut the cutting material. For example, background music, a transition effect, a filter, and the like are automatically added, based on a preset editing template, to a photo or a video included in the cutting material.

For example, with reference to FIG. 5 again, after the mobile phone generates the cutting material A, the mobile phone may further pre-cut the cutting material A to obtain a cutting material B. In the cutting material B, the photo A is displayed for ten seconds, and the photo B is displayed for five seconds. In addition, the photo A and the photo B are displayed with background music. Then the video A is displayed through a transition motion effect. The photo B has a filter.

In some embodiments, the mobile phone may generate a label based on content of the photo or the video included in the cutting material, and obtain, based on the label, background music, a transition motion effect, a filter, and the like that match the label. Then the mobile phone pre-cuts, based on the background music, the transition effect, the filter, and the like that match the label, the cutting material obtained by the mobile phone through searching.

It should be understood that the mobile phone may perform image identification on a photo or a video on the mobile phone, and identify content of the photo or the video to obtain a label. The label may be used to represent a style, an atmosphere, content, and the like of the photo or the video. For specific implementation of this process, refer to a related technology. Details are not described in this embodiment of this application.

In some embodiments, the process in which the mobile phone obtains the cutting material through searching and pre-cuts the cutting material may be referred to as a "highlights" function, and the cutting material may also be referred to as magic moments. In other words, the mobile phone may generate the cutting material by using the "highlights" function.

In some other embodiments, the mobile phone may alternatively obtain the cutting material from another device (for example, the cloud). For example, the mobile phone may obtain, from the cloud by using a user account to which the mobile phone logs in, a cutting material in the user account. It should be understood that the cloud may also generate a cutting material by using a photo and/or a video in the user account. For a specific process of generating the cutting material by the cloud, refer to the foregoing description corresponding to FIG. 5. This is not limited in this embodiment of this application.

It should be understood that in this embodiment of this application, the mobile phone may obtain the cutting material in more manners. For example, the cutting material is downloaded from a network, or a user performs manual editing to generate the cutting material. For a specific implementation process, refer to a related technology. Details are not described herein.

S401: The mobile phone displays a 1^{st} cutting interface.

It should be understood that the cutting interface is an interface used to cut the cutting material. For example, a plurality of photos included in the cutting material are composited into a video, background music is added to the cutting material, a motion effect is added to the cutting material, or a text is added to the cutting material.

In a possible implementation, the mobile phone displays the cutting interface in response to a tap operation on the cutting material in a Gallery application.

For example, the user may indicate, by touching a specific control on a screen of the mobile phone, pressing a specific physical button or button combination, inputting a voice, making a mid-air gesture, or the like, the mobile phone to enable the Gallery application. The Gallery application is also referred to as albums, photos, or the like. The mobile phone displays a main interface of Gallery in response to receiving the indication of the user for enabling Gallery.

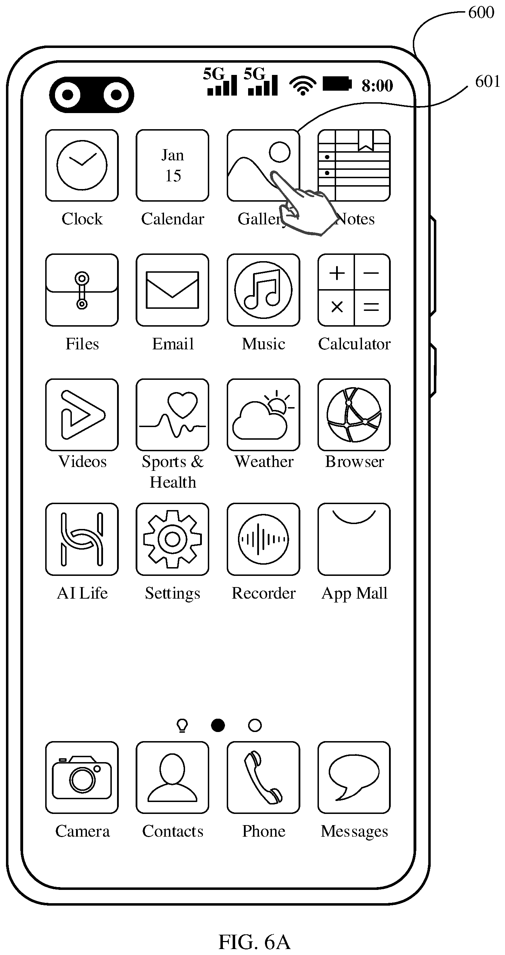

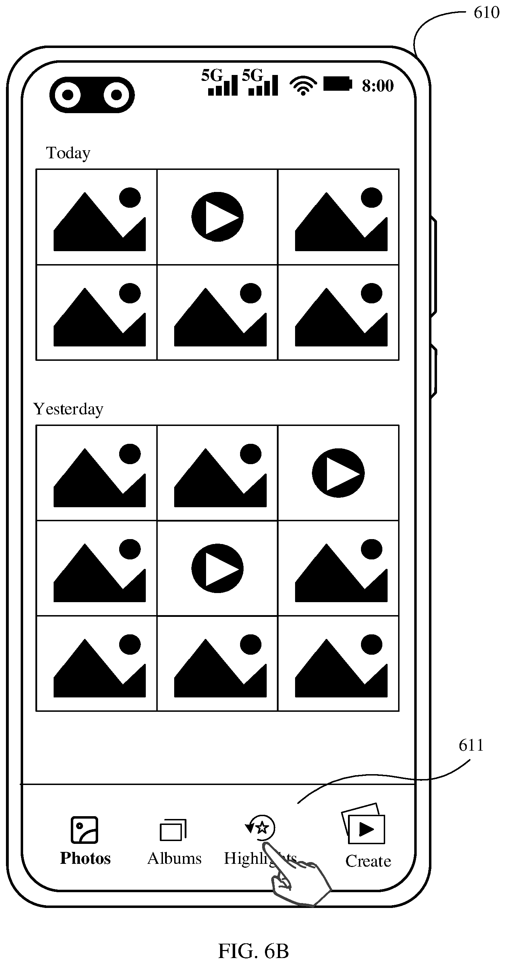

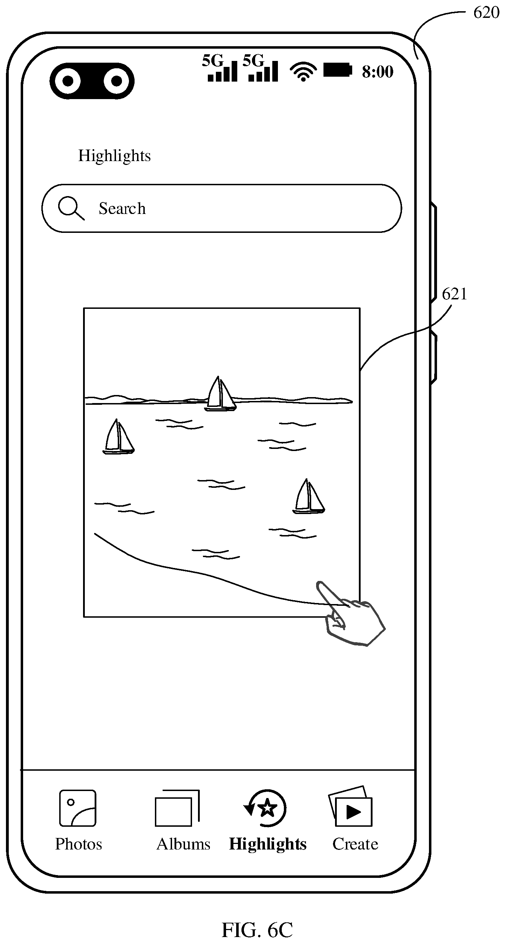

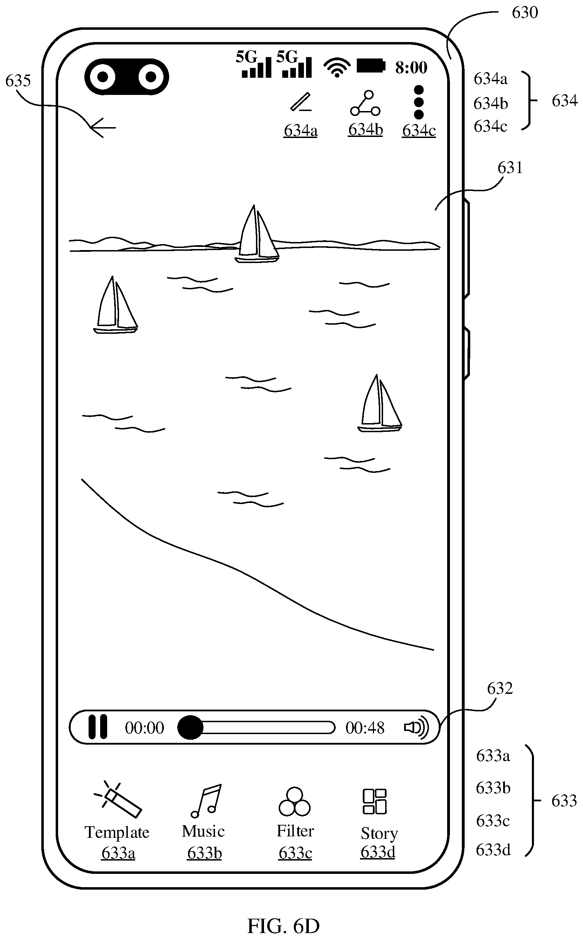

For example, with reference to FIG. 6A, FIG. 6B, FIG. 6C, and FIG. 6D, the mobile phone displays a home screen 600. The mobile phone displays a main interface 610 of the Gallery application in response to a tap operation on an icon 601 corresponding to the Gallery application. Thumbnails of a plurality of pictures, thumbnails of a plurality of videos, and an option button such as a "highlights" option button 611 are displayed in the main interface 610 of the Gallery application.

Then the mobile phone displays a "highlights" option menu 620 of the Gallery application in response to a tap operation on the "highlights" option button 611 in the main interface 610 of the Gallery application. A search box, an option button, and a thumbnail 621 of the cutting material are displayed in the "highlights" option menu 620 of the Gallery application. In the "highlights" option menu 620, a text description corresponding to the highlights option is filled with a slash to indicate a selected state.

Then the mobile phone displays a 1^{st} cutting interface 630 in response to a tap operation on the thumbnail 621 of the cutting material. The 1^{st} cutting interface 630 includes a cutting material 631, a play control 632, a cutting menu 633, a function button 634, an exit button 635, and the like. The play control 632 is configured to control a play parameter of the cutting material 631, for example, control pause, playing, a volume, and a play progress of the cutting material 631. The cutting menu 633 is configured to provide a plurality of cutting options for selection by the user. The plurality of cutting options may include a template option 633a, a music option 633b, a filter option 633c, and a story option 633d. The function button 634 is configured to provide a plurality of function options for selection by the user. The plurality of function options may include deep cutting 634a, share 634b, and a more option 634c. The exit button 635 is configured to enable the user to exit the current cutting interface and return to display of the "highlights" option menu 620 of the Gallery application. In some embodiments, the 1^{st} cutting interface may be referred to as a first cutting interface. The music option may be referred to as a music control.

It should be noted that the cutting menu 633 may include more or fewer cutting options than those shown in FIG. 6A, FIG. 6B, FIG. 6C, and FIG. 6D, and names and/or icons of the included cutting options may also be different. For example, the template may also be referred to as a theme, a background, or the like. This is not limited herein. Similarly, the function button 634 may also include more or fewer function options than those shown in FIG. 6A, FIG. 6B, FIG. 6C, and FIG. 6D, and names and/or icons of the included function options may also be different. This is not limited herein. It should be noted that in FIG. 6A, FIG. 6B, FIG. 6C, and FIG. 6D and the following accompanying drawings in the embodiments of this application, all underlined words in the accompanying drawings, for example, 634a and 634b in FIG. 6A, FIG. 6B, FIG. 6C, and FIG. 6D, are reference numerals, and should not be understood as elements in a display image of the mobile phone.

Specifically, the template option 633a may provide an editing template for selection by the user, and each editing template may include a filter, a transition, music, a text, a special effect, and the like that are preset. The user may add an editing template to the cutting material 631 by using the template option 633a, in other words, add a filter, a transition, music, a text, a special effect, and the like to the cutting material 631 based on the editing template.

The music option 633b may provide a plurality of pieces of music for selection by the user, to add background music to the cutting material.

The filter option 633c may provide a plurality of filters for selection by the user. By changing the filter, a tone, for example, a cold tone, a warm tone, and a black-and-white tone, of the cutting material may be changed.

The story option 633d may enable the user to view the photo or the video included in the cutting material 631, and for example, add a photo to, add a video to, delete a photo from, delete a video from the cutting material 631.

Deep cutting 634a may provide, for cutting the cutting material by the user, more comprehensive and rich cutting functions than the 1^{st} cutting interface described above.

For example, the mobile phone displays a deep cutting interface in response to a tap operation on deep cutting 634a. Specifically, for detailed descriptions of the deep cutting interface, refer to the following description. Details are not described herein again.

Share 634b may provide a plurality of sharing channels for selection by the user. The user may share the cutting materials with other software through the sharing channels.

The more option 634c may provide, for the user, more operations of performing saving, renaming, and the like on the cutting material 631.

It should be noted that in some embodiments, the cutting material 631 may be automatically played in the 1^{st} cutting interface 630. To be specific, the mobile phone displays the 1^{st} cutting interface 630 in response to a tap operation on the thumbnail 621 of the cutting material, and the cutting material 631 included in the 1^{st} cutting interface 630 is being played. In addition, background music of the cutting material 631 is background music added to the cutting material 631 when the cutting material is generated, for example, template-default background music.

In another possible implementation, after the mobile phone obtains the cutting material, the mobile phone may display a notification message. The notification message includes a text description used to provide a prompt for the user. Then the mobile phone displays a cutting interface in response to a tap operation performed by the user on the notification message. The notification message may be displayed on the mobile phone in a form of a push, a form of a card, a form of a pull-down menu bar, or the like. A display form of the notification message is not limited in this embodiment of this application.

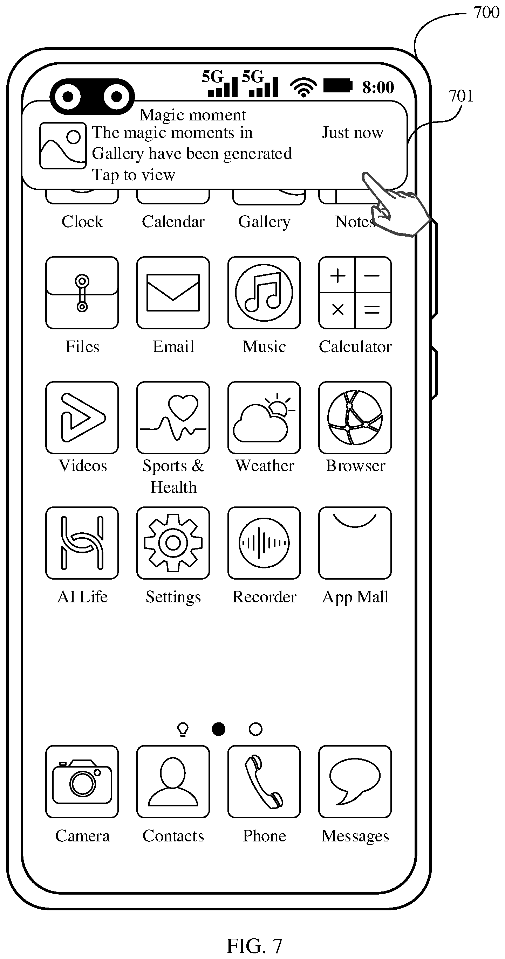

For example, with reference to FIG. 7, after the mobile phone performs step S400, the mobile phone displays the notification message. For example, a notification message 701 is displayed on a home screen 700 of the mobile phone in the display form of a push. Then the mobile phone displays the 1^{st} cutting interface 630 in FIG. 6A, FIG. 6B, FIG. 6C, and FIG. 6D in response to a tap operation on the notification message 701.

The mobile phone performs steps S402 after performing step S401.

S402: The mobile phone displays a 2^{nd} cutting interface in response to a tap operation on a 1^{st} interface element.

The 1^{st} interface element may be an interface element corresponding to the music option 633b in the 1^{st} cutting interface 630 shown in FIG. 6A, FIG. 6B, FIG. 6C, and FIG. 6D.

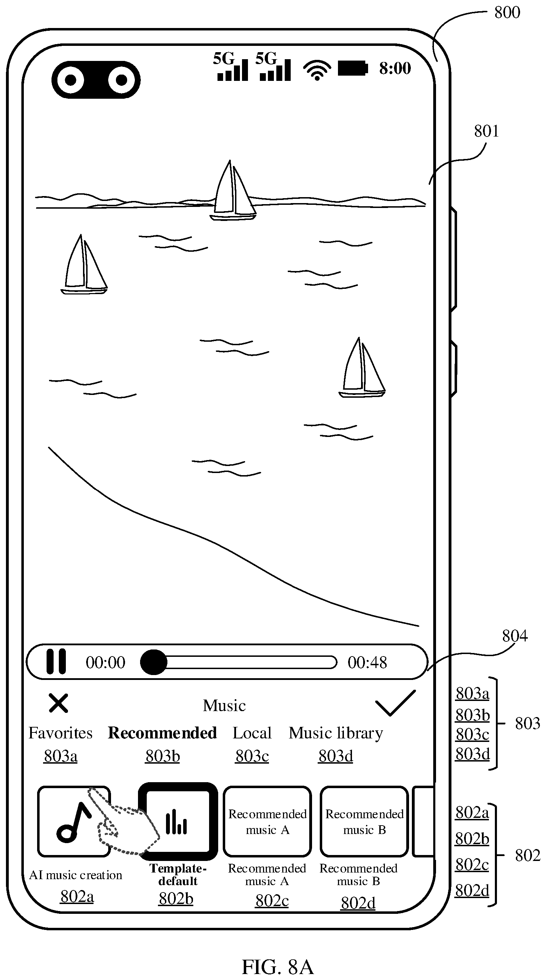

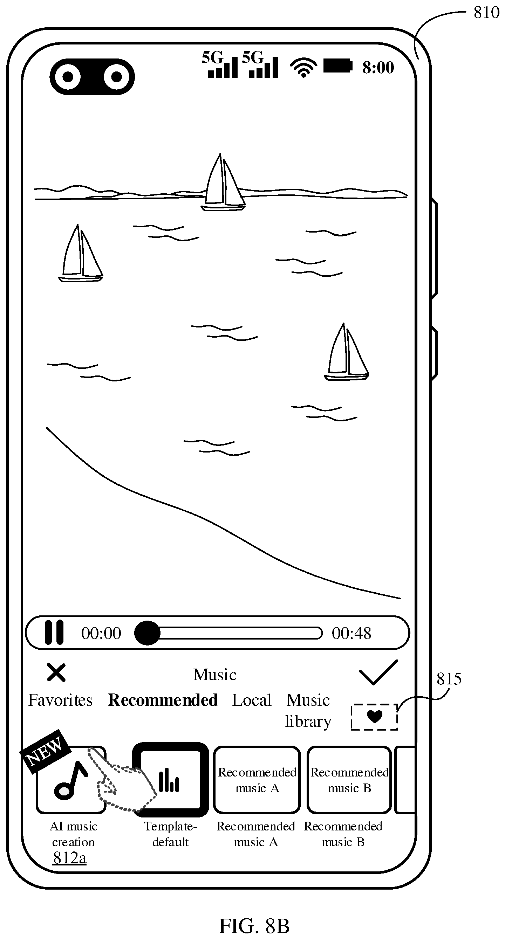

In a possible implementation, with reference to FIG. 6A, FIG. 6B, FIG. 6C, and FIG. 6D and FIG. 8A and FIG. 8B, the mobile phone displays a 2^{nd} cutting interface 800 in response to a tap operation on the music option 633b. The 2^{nd} cutting interface 800 includes a cutting material 801, a music material control 802, a music material control menu 803, and a play control 804. The user may perform replacement with different background music for the cutting material 801 by using the 2^{nd} cutting interface.

The music material control 802 is configured to provide different music material controls for use by the user. For example, the music material control 802 includes a 1^{st} music material control 802a, a 1^{st} local music material control 802b, a 2^{nd} local music material control 802c, and a 3^{rd} local music material control 802d. The 1^{st} music material control 802a is configured to provide an entry that triggers the mobile phone to generate artificial intelligent (artificial intelligent, AI) music. The local music material controls (for example, the 1^{st} local music material control 802b, the 2^{nd} local music material control 802c, and the 3^{rd} local music material control 802d) correspond to local music. The music material control menu 803 is configured to classify the music material controls to provide different types of music material controls for use by the user. For example, the music material control menu 803 may include favorites 803a, recommended 803b, local 803c, and a music library 803d. The play control 804 is configured to control a play parameter of the cutting material 801. For a process of generating the AI music, refer to steps in the following embodiments. Details are not described herein again.

It should be understood that the AI music is random, and is generated based on a label in the cutting material. In some other embodiments, the AI music may be replaced with other music, for example, music generated by using some music generation algorithms or music obtained by performing music synthesis on local music by using some music synthesis algorithms. Specifically, a design may be made based on an actual use requirement. This is not limited in this embodiment of this application.

It should be noted that after the mobile phone displays the 2^{nd} cutting interface, the cutting material 801 may be in a playing state. For example, the cutting material 801 is played by using template-default music corresponding to the 1^{st} local music material control 802b as background music. The user may control a play progress of the cutting material 801, pause playing of the cutting material 801, and the like by using the play control 804. Recommended 803b is in a selected state, and a relatively thick border is used to indicate that the 1^{st} local music material control 802b is in a selected state. In some other embodiments, after the mobile phone is triggered to display the 2^{nd} cutting interface, the cutting material 801 may alternatively be in a to-be-played state, for example, playing is paused at a first frame of the cutting material 801. Then, in response to a trigger operation on the play control 804, the mobile phone plays the cutting material by using the template-default music corresponding to the 1^{st} local music material control 802b as the background music. It may be understood that responding to the trigger operation on the play control 804 may be tapping a play button in the play control 804.

In still another possible implementation, with reference to FIG. 6A, FIG. 6B, FIG. 6C, and FIG. 6D and FIG. 8A and FIG. 8B, the mobile phone displays a 2^{nd} cutting interface 810 in response to a tap operation on the music option 633b. In some scenarios, if the user does not use an AI music function before the user triggers the mobile phone to display the interface 810, in other words, the user uses the AI music function for the first time, a "new" icon is displayed on an interface element corresponding to AI music creation 812a in the 2^{nd} cutting interface 810.

That the user does not use the AI music function may mean that the user does not use AI music creation before triggering the mobile phone to display the 2^{nd} cutting interface this time. For example, the user does not tap, in the 2^{nd} cutting interface 810, the interface element corresponding to AI music creation 812a. It should be understood that the mobile phone may record, by using a configuration table, whether the user uses the AI music function for the first time. If the user uses the AI music function for the first time, the "new" icon is displayed on the interface element corresponding to AI music creation.

In this implementation, the "new" icon is displayed on the interface element corresponding to AI music creation, so that the user can directly perceive, in the 2^{nd} cutting interface, that the AI music function is newly added, thereby improving use experience of the user.

Optionally, the 2^{nd} cutting interface 810 may further include a favorites button 815, and the favorites button 815 is configured to trigger an operation of adding a music material control currently in a selected state to favorites. It should be understood that after the music material control is added to favorites, the mobile phone may view the music in a favorites menu.

It should be understood that the "new" icon in the 2^{nd} cutting interface 810 shown in FIG. 8A and FIG. 8B is merely an example, and there may be another form in actual use. This is not limited in this embodiment of this application.

S403: The mobile phone displays a 3^{rd} cutting interface in response to a tap operation on a 2^{nd} interface element.

The 2^{nd} interface element may be an interface element corresponding to AI music creation 802a in the 2^{nd} cutting interface 800 shown in FIG. 8A and FIG. 8B. Alternatively, the 2^{nd} interface element may be an interface element corresponding to AI music creation 812a in the 2^{nd} cutting interface 810 shown in FIG. 8A and FIG. 8B.

It should be understood that one of purposes of performing the tap operation on the 2^{nd} interface element is to trigger replacement of the background music of the cutting material with AI music. In some other embodiments, the tap operation may be replaced with another operation, for example, a voice instruction input by the user. This is not limited in this embodiment of this application.

In a possible implementation, the mobile phone sends an AI music generation request based on the label of the cutting material in response to the tap operation on the 2^{nd} interface element, so that the mobile phone can obtain AI music locally generated by the mobile phone, or the mobile phone can obtain AI music generated by the cloud. Then the mobile phone displays the 3^{rd} cutting interface in response to receiving the AI music.

The label of the cutting material may be obtained by using a label of a photo included in the cutting material or a label of a video included in the cutting material. For example, an AI music model may be locally deployed on the mobile phone, and the mobile phone may generate the AI music based on the AI music model and the AI music generation request. Alternatively, the mobile phone may send the AI music generation request to another device (for example, the cloud) that establishes a communication connection to the mobile phone. In response to the AI music generation request, the another device sends AI music generated by the another device to the mobile phone.

It may be understood that there may be other more processes of generating the AI music in a specific application. Specifically, for the process of generating the AI music, refer to a related technology. This is not limited in this embodiment of this application.

In some embodiments, considering that it takes some time for the mobile phone to locally generate the AI music and for the cloud to generate the AI music, in these embodiments, the mobile phone may alternatively first display a 4^{th} cutting interface before displaying the 3^{rd} cutting interface. To be specific, the mobile phone displays the 4^{th} cutting interface in response to the tap operation on the 2^{nd} interface element, and the 4^{th} cutting interface is used to display a state in which AI music is being created. When the mobile phone displays the 4^{th} cutting interface, the mobile phone waits for the AI music to be generated. In response to the mobile phone obtaining the AI music, in other words, AI music generation being completed, the mobile phone displays the 3^{rd} cutting interface.

In this embodiment, the mobile phone displays the 4^{th} cutting interface, so that the user can perceive a process in which the mobile phone is creating the AI music, thereby improving an immersion feeling of using the cutting interface by the user and improving use experience of the user.

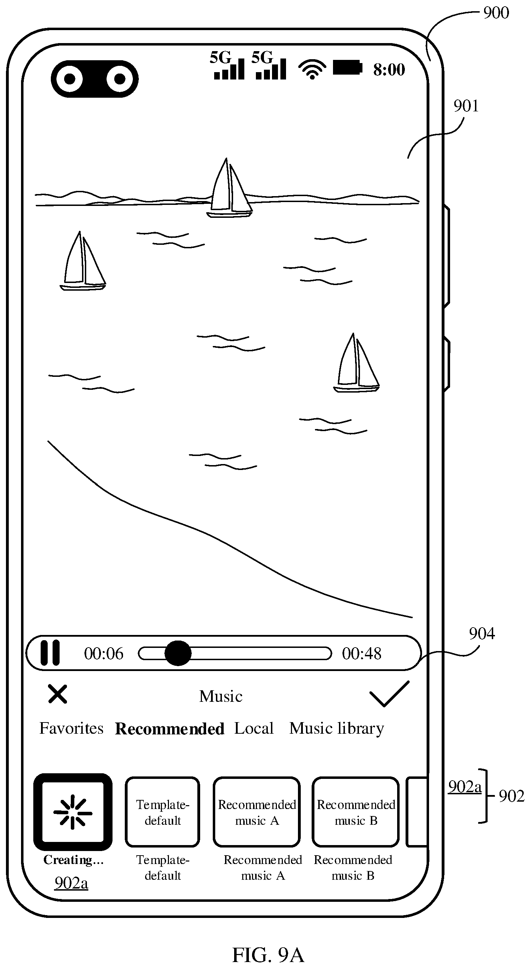

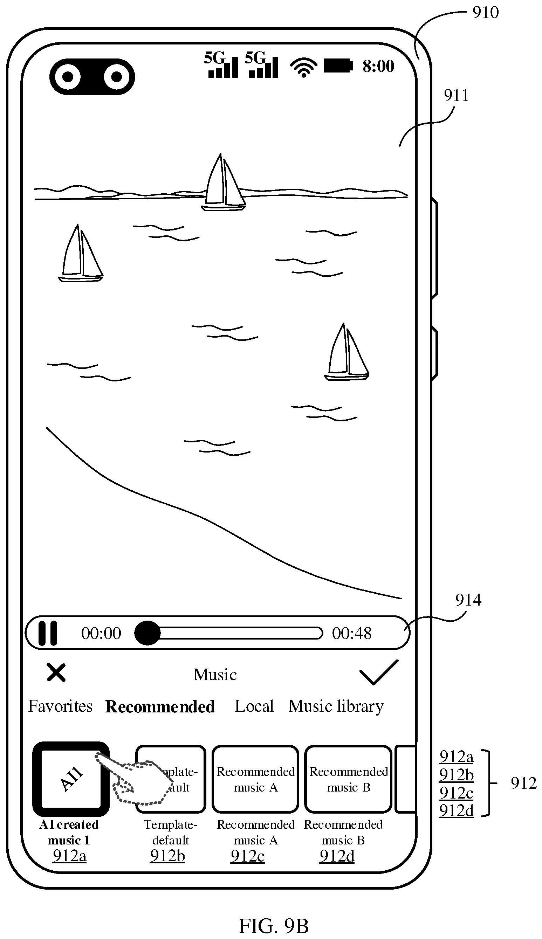

For example, with reference to FIG. 9A and FIG. 9B, in response to the tap operation on the 2^{nd} interface element, the mobile phone sends the AI music generation request, and displays a 4^{th} cutting interface 900. The 4^{th} cutting interface 900 includes a cutting material 901, a music material control 902, and a play control 904. The music material control 902 includes a 1^{st} music material control 902a. The 1^{st} music material control 902a is in a selected state, and a relative location of the 1^{st} music material control 902a in the 4^{th} cutting interface 900 is the same as a relative location of the 2^{nd} interface element in the 2^{nd} cutting interface 800. The 1^{st} music material control 902a is configured to display the state in which the AI music is being created. For example, the 1^{st} music material control 902a displays, by using a loading icon (cover), the state in which the AI music is being created. For another example, the 1^{st} music material control 902a displays, by using a text description "creating...", the state in which the AI music is being created.

It should be noted that the cutting material 901 in the 4^{th} cutting interface 900 and the cutting material 801 in the 2^{nd} cutting interface 800 are played in succession. Correspondingly, the play control 904 in the 4^{th} cutting interface 900 corresponds to the play control 804 in the 2^{nd} cutting interface 800. For example, in the 2^{nd} cutting interface 800, when the cutting material 801 reaches 00:06 through playing, the user taps the 2^{nd} interface element to trigger the mobile phone to display the 4^{th} cutting interface 900. In this case, in the 4^{th} cutting interface 900, the cutting material 901 is played in succession from 00:06. Correspondingly, in the 4^{th} cutting interface 900, a progress bar of the play control 804 also reaches 00:06. In addition, because no AI music is generated (or being generated) in the 4^{th} cutting interface 900 of the mobile phone, background music of the cutting material 901 is the same as the background music of the cutting material 801 in the 2^{nd} cutting interface 800, for example, is the template-default music.

For example, with reference to FIG. 9A and FIG. 9B again, the mobile phone displays a 3^{rd} cutting interface 910 in response to obtaining the AI music. The 3^{rd} cutting interface 910 includes a cutting material 911, a music material control 912, and a play control 914. The music material control 912 includes a 2^{nd} music material control 912a. The 2^{nd} music material control 912a is in a selected state, and a relative location of the 2^{nd} music material control 912a in the 4^{th} cutting interface 910 is the same as a relative location of the 1^{st} music material control 902a in the 4^{th} cutting interface 900. The 2^{nd} music material control 912a is configured to display AI music, and enable the user to set background music of the cutting material 911 to the AI music corresponding to the 2^{nd} music material control 912a. For example, the 2^{nd} music material control displays the AI music by using a preset icon (cover). For another example, the 2^{nd} music material control displays the AI music by using a text description "AI created music 1".

It should be noted that because the user triggers, by using the 2^{nd} interface element, the background music of the cutting material to be switched, in the 3^{rd} cutting interface 910, the cutting material 911 may be replayed, for example, the cutting material 911 starts to be played from 00:00. Correspondingly, the play control 904 in the 3^{rd} cutting interface 910 is also in a replaying state, for example, a progress bar of the play control 904 starts from 00:00. In addition, the background music of the cutting material 911 is the AI created music 1 corresponding to the 2^{nd} music material control 912a.

In some embodiments, the 3^{rd} cutting interface may further include a plurality of local music material controls corresponding to local music. In this way, the user can also trigger, in the 3^{rd} cutting interface, the background music of the cutting material to be switched to the local music.

For example, with reference to FIG. 9A and FIG. 9B again, the 3^{rd} cutting interface 910 includes a cutting material 911, a music material control 912, and a play control 914. The music material control 912 includes a 2^{nd} music material control 912a corresponding to AI music and a plurality of local music material controls corresponding to local music. The local music material controls include a 1^{st} local music material control 912b, a 2^{nd} local music material control 912c, and a 3^{rd} local music material control 912d.

It should be understood that in some embodiments, the AI music generated by the AI music model may have no cover, in other words, the AI music obtained by the mobile phone has no cover, and includes only music content and an identifier. Therefore, several covers may be preset, and the preset cover may be displayed in the 3^{rd} cutting interface 910, so that use experience of the user can be improved.

In some other embodiments, the AI music may be provided by another third-party supplier. Therefore, a cover including a logo of the third-party supplier is preset, so that the user can perceive that the AI music is provided by the third-party supplier, and a brand promotion requirement of the third-party supplier can be met.

It may be understood that in some other embodiments, the AI music may be generated in advance. For example, the AI music is generated in relatively short time, or the AI music is generated based on the label of the cutting material when the cutting material is generated. Therefore, the mobile phone may directly display the 3^{rd} cutting interface without displaying the 4^{th} cutting interface. This is not limited in this embodiment of this application. Alternatively, in some other embodiments, even if the AI music is generated in advance, the mobile phone may display the 4^{th} cutting interface of preset duration, for example, three seconds or five seconds, and then the mobile phone displays the 3^{rd} cutting interface, so that the user can perceive a process in which the mobile phone is creating the AI music, thereby improving an immersion feeling of using the cutting interface by the user and improving use experience of the user.

In some scenarios, if the user does not authorize (sign) a related user agreement and/or privacy agreement before step S403, the mobile phone may display an agreement pop-up window in step S403. The agreement pop-up window is configured to enable the user to authorize (sign) the related user agreement and/or privacy agreement. Then, after the user authorizes (signs) the related user agreement and/or privacy agreement, the mobile phone displays the 3^{rd} cutting interface, or the user displays the 3^{rd} cutting interface after displaying the 4^{th} cutting interface.

It should be understood that the mobile phone may include an agreement toggle, whether the user authorizes (signs) the related user agreement and/or privacy agreement may be represented by using a status of the agreement toggle. For example, that the agreement toggle is enabled indicates that the user authorizes (signs) the related user agreement and/or privacy agreement. For another example, that the agreement toggle is disabled indicates that the user does not authorize (sign) the related user agreement and/or privacy agreement.

In a possible implementation, the mobile phone may determine, by using a user agreement flag bit, whether the user authorizes (signs) the related user agreement and/or privacy agreement. For example, if the user signs the related user agreement and/or privacy agreement, the user agreement flag bit is set to 1; and if the user does not sign the related user agreement and/or privacy agreement, the user agreement flag bit is set to 0.

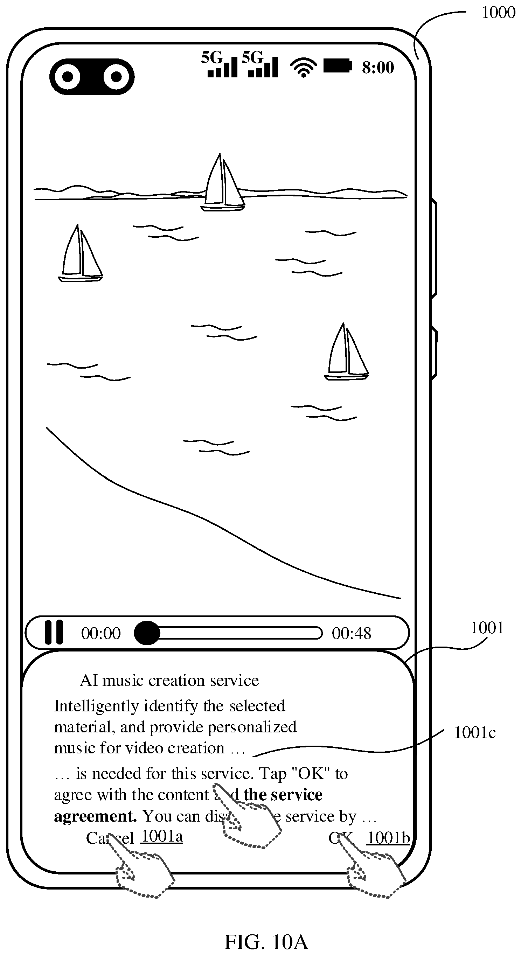

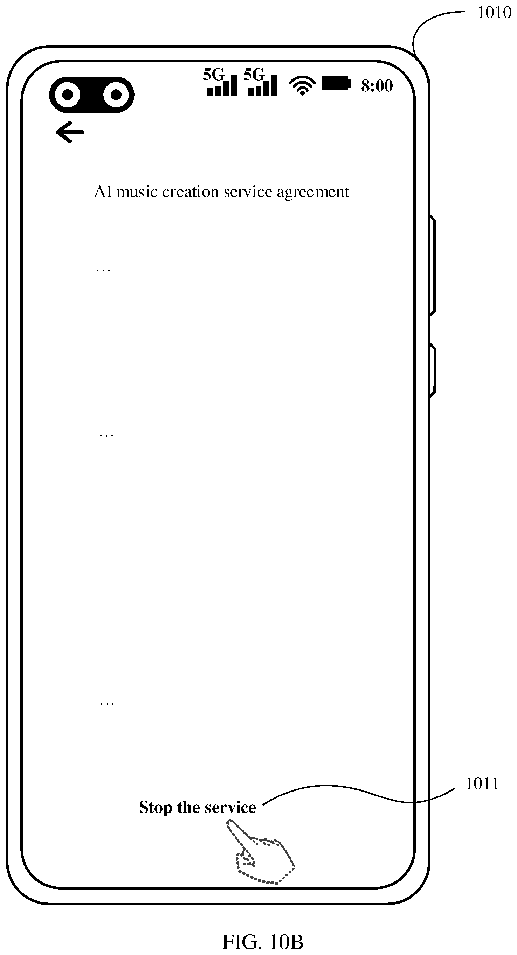

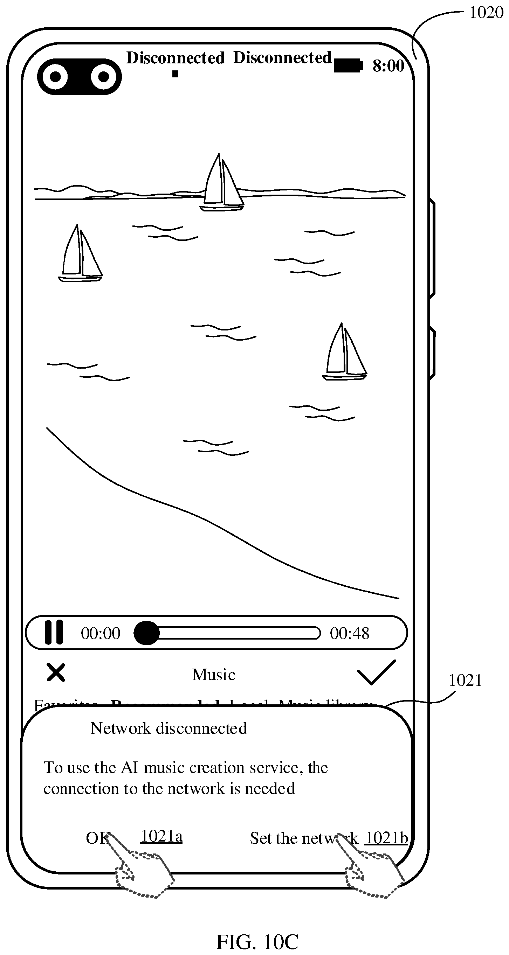

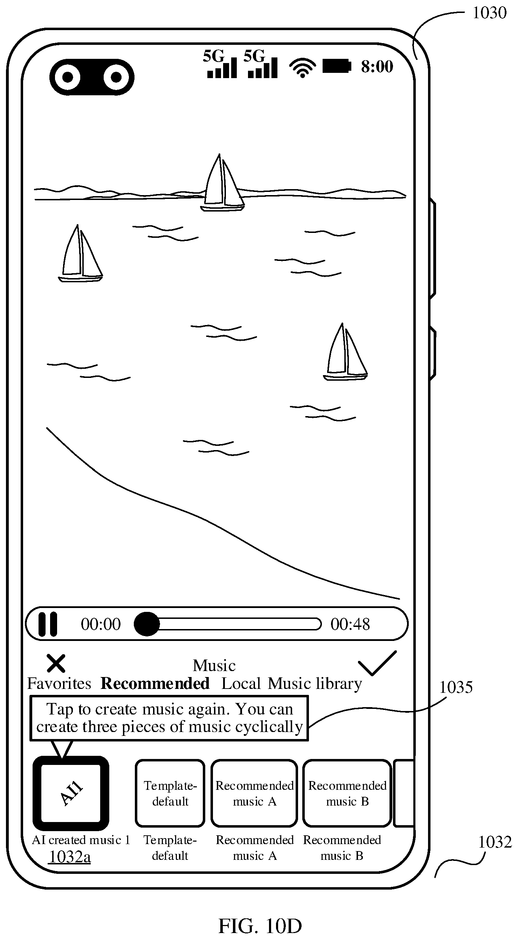

For example, with reference to FIG. 10A, FIG. 10B, FIG. 10C, and FIG. 10D, in response to the tap operation on the 2^{nd} interface element, the mobile phone determines, by using the user agreement flag bit, that the user does not sign the related user agreement and/or privacy agreement, and the mobile phone displays an interface 1000 with an agreement pop-up window 1001. The agreement pop-up window 1001 includes a 1^{st} option 1001a, a 2^{nd} option 1001b, and a 3^{rd} option 1001c.

Then the mobile phone displays the 2^{nd} cutting interface in response to a tap operation on the 1^{st} option 1001a. Alternatively, in response to a tap operation on the 2^{nd} option 1001b, the mobile phone sets the user agreement flag bit to 1, and the mobile phone displays the 3^{rd} cutting interface. Alternatively, the mobile phone displays an agreement detail interface 1010 in response to a tap operation on the 3^{rd} option 1001c. The agreement detail interface 1010 includes a 4^{th} option 1011. The mobile phone displays the 2^{nd} cutting interface in response to a tap operation on the 4^{th} option 1011.

In some scenarios, the AI music is generated by the cloud that establishes a communication connection to the mobile phone, and the mobile phone needs to be connected to a network. Therefore, if the mobile phone is disconnected from the network, the mobile phone displays a network connection pop-up window. The network connection pop-up window is configured to provide, for the user, a prompt that the mobile phone is disconnected from the network.

In a possible implementation, the mobile phone may obtain a network connection status of the mobile phone by using a system service. The network connection status includes network disconnected and network connected. When the mobile phone performs step S403, if the network connection status of the mobile phone is network disconnected, the mobile phone displays the network connection pop-up window.

For example, with reference to FIG. 10A, FIG. 10B, FIG. 10C, and FIG. 10D again, in response to the tap operation on the 2^{nd} interface element, the mobile phone displays an interface 1020 with a network connection pop-up window 1021 based on the network status of the mobile phone being network disconnected. The network connection pop-up window 1021 includes a 6^{th} option 1021a and a 5^{th} option 1021b.

Then the mobile phone displays the 2^{nd} cutting interface in response to a tap operation on the 6^{th} option 1021a. A cutting material included in the 2^{nd} cutting interface is played in succession. Alternatively, the mobile phone displays a network setting interface in response to a tap operation on the 5^{th} option 1021b. For related descriptions of the network setting interface, refer to a design in the related technology. Details are not described in this embodiment of this application.

In some embodiments, the process in which the mobile phone displays the network connection pop-up window may be referred to a process in which the mobile phone displays a network connection prompt.

In some other embodiments, the tap operation on the 6^{th} option may also be expressed as an operation of determining not to connect to the network. The tap operation on the 5^{th} option may also be expressed as an operation of connecting to the network.

It should be noted that if the user does not previously authorize (sign) the related user agreement and/or privacy agreement when the mobile phone performs step S403, and the mobile phone is disconnected from the network, the mobile phone first displays the agreement pop-up window, and then displays the network connection pop-up window. For example, with reference to FIG. 10A, FIG. 10B, FIG. 10C, and FIG. 10D again, the mobile phone displays the interface 1000 with the agreement pop-up window 1001 in response to the tap operation on the 2^{nd} interface element. The agreement pop-up window 1001 includes the 3^{rd} option 1001b. The mobile phone displays the interface 1020 with the network connection pop-up window 1021 in response to a tap operation on the 3^{rd} option 1001b.

In some embodiments, that the mobile phone is disconnected from the network and the agreement toggle of the mobile phone is disabled may be expressed as that the mobile phone meets a second condition.

In some embodiments, in the process of generating the AI music, the mobile phone (the cloud) may generate a plurality of pieces of AI music at a time. After receiving the plurality of pieces of AI music, the mobile phone may analyze matching degrees between the plurality of pieces of AI music and the cutting material, and sort the plurality of pieces of AI music. Then the mobile phone displays AI music with a highest matching degree in the 3^{rd} cutting interface. Alternatively, in the process of generating the AI music, a plurality of pieces of AI music and a matching degree between each piece of AI music and the cutting material are generated. Then the mobile phone displays AI music with a highest matching degree in the 3^{rd} cutting interface.

For example, in the process of generating the AI music, three pieces of AI music, for example, the AI created music 1, AI created music 2, and AI created music 3, are generated based on the label of the cutting material. The mobile phone analyzes matching degrees between the three pieces of AI music and the cutting material. The AI created music 1 has a highest matching degree, the AI created music 2 has a second highest matching degree, and the AI created music 3 has a lowest matching degree. In this case, the mobile phone displays the AI music with the highest matching degree in the 3^{rd} cutting interface. In other words, the 2^{nd} music material control included in the 3^{rd} cutting interface corresponds to the AI created music 1.

It may be understood that a quantity of pieces of AI music generated by the mobile phone (the cloud) may be set based on an actual use requirement, for example, may be 3, 5, or 6. In the following embodiments of this application, an example in which three pieces of AI music are generated by the mobile phone (the cloud) is used for description. The quantity of pieces of AI music generated by the mobile phone (the cloud) is not limited in this embodiment of this application.

In some scenarios, if the user uses the AI music function for the first time, prompt information is displayed at a first location in the 3^{rd} cutting interface. The first location is related to the 2^{nd} music material control, and the prompt information is used to prompt the user to perform an operation of switching the AI music used as the background music of the cutting material.

In this way, after the user observes the prompt information, the user can learn of how to switch the background music of the cutting material in the 3^{rd} cutting interface.

It may be understood that if the user uses the AI music function for the first time, the user does not sign the user agreement in most cases. Therefore, the 3^{rd} cutting interface with the prompt information may be displayed after the user signs the user agreement.

For example, with reference to FIG. 10A, FIG. 10B, FIG. 10C, and FIG. 10D again, after the mobile phone displays the interface 1000 with the agreement pop-up window 1001, the mobile phone displays a 3^{rd} cutting interface 1030 with prompt information 1035 in response to the tap operation on the 2^{nd} option 1001b. The 3^{rd} cutting interface 1030 includes a music material control 1032 and the prompt information 1035. The music material control 1032 includes a 2^{nd} music material control 1032a. The prompt information 1035 includes a text description "Tap to create music again. You can play three pieces of music cyclically" or "Tap to create music again. You can play five pieces of music cyclically". A display location of the prompt information 1035 is related to a display location of the 2^{nd} music material control 1032a. For example, the display location of the prompt information 1035 is above the display location of the 2^{nd} music material control 1032a.

It should be understood that the text description included in the prompt information 1035 may be related to a preset quantity of pieces of AI music on the mobile phone. For example, if the preset quantity of pieces of AI music is five, the text description may be "Tap to create music again. You can play five pieces of music cyclically".

Then the mobile phone performs step S404 after the mobile phone performs step S403.

S404: The mobile phone displays a 5^{th} cutting interface in response to a tap operation on a 3^{rd} interface element.

The 3^{rd} interface element may be an interface element corresponding to the 2^{nd} music material control 912a in the 3^{rd} cutting interface 910 shown in FIG. 9A and FIG. 9B.

In some embodiments, the 3^{rd} interface element may also be referred to as a second music option.

It should be understood that one of purposes of performing the tap operation on the 3^{rd} interface element is to trigger switching of the AI music used as the background music of the cutting material, for example, switching from the AI created music 1 to the AI created music 2. In some other embodiments, the tap operation may be replaced with another operation, for example, inputting a voice instruction by the user. This is not limited in this embodiment of this application.

In a possible implementation, the mobile phone displays the 5^{th} cutting interface in response to the tap operation on the 3^{rd} interface element. The 5^{th} cutting interface includes at least one music material control, the 3^{rd} cutting interface does not include the music material control, and the music material control corresponds to AI music. In other words, compared with the 3^{rd} cutting interface, the 5^{th} cutting interface undergoes switching of a music material control corresponding to AI music.

In this implementation, the user may switch between a plurality of pieces AI music by using the 3^{rd} interface element, so that the user can flexibly switch the AI music for the cutting material.

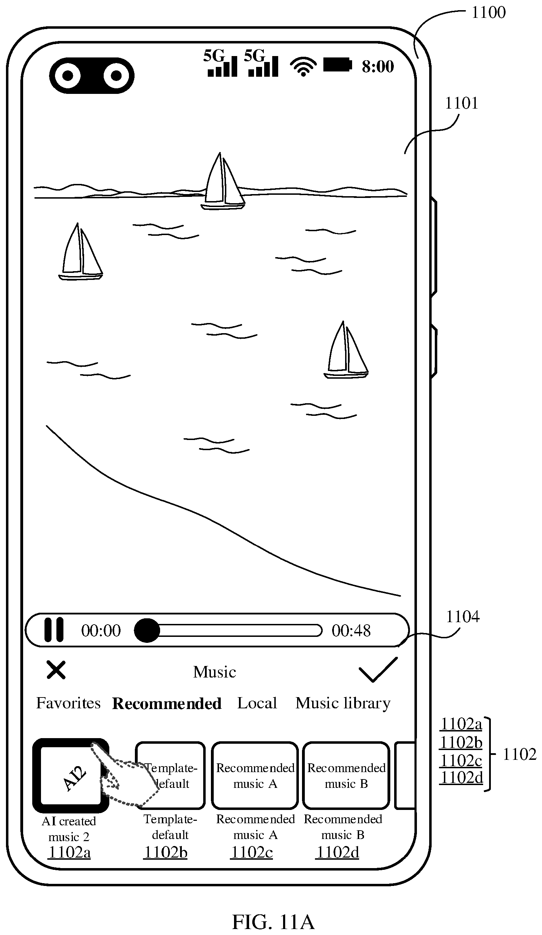

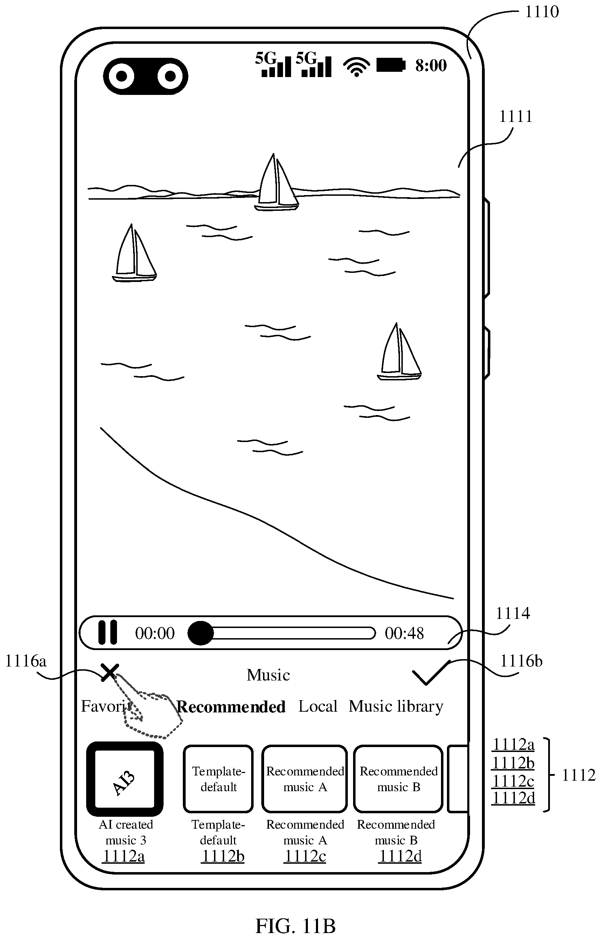

For example, with reference to FIG. 11A and FIG. 11B, the mobile phone displays a 5^{th} cutting interface 1100 in response to the tap operation on the 3^{rd} interface element. The 5^{th} cutting interface 1100 includes a cutting material 1101, a music material control 1102, and a play control 1104. The music material control 1102 includes a 3^{rd} music material control 1102a and local music material controls. The local music material controls include a 1^{st} local music material control 1102b, a 2^{nd} local music material control 1102c, and a 3^{rd} local music material control 1102d. The 3^{rd} music material control 1102a is in a selected state, and a relative location of the 3^{rd} music material control 1102a in the 5^{th} cutting interface 1100 is the same as a relative location of the 3^{rd} interface element in the 3^{rd} cutting interface. The 3^{rd} music material control 1102a is configured to display AI music, and enable the user to set background music of the cutting material 1101 to AI music corresponding to the 3^{rd} music material control 1102a. The local music material control is configured to display local music, and enable the user to set the background music of the cutting material 1101 to AI music corresponding to the local music material control. For example, the 3^{rd} music material control displays the AI music by using a preset icon (cover). For another example, the 3^{rd} music material control displays the AI music by using a text description "AI created music 2". It should be noted that because the user triggers, by using the 3^{rd} interface element, switching of the AI music used as the background music of the cutting material, the cutting material 1101 may be replayed in the 5^{th} cutting interface, for example, the cutting material 1101 starts to be played from 00:00. Correspondingly, a progress bar of the play control 1104 starts from 00:00. In addition, the background music of the cutting material 1101 is the AI created music 2 corresponding to the 3^{rd} music material control.

In some embodiments, the 5^{th} cutting interface 1100 may be referred to as a second cutting interface.

In still another possible implementation, before the mobile phone displays the 5^{th} cutting interface, the mobile phone may further display an interface, for example, the 4^{th} cutting interface, used to display an AI music creation process. After display duration of the interface used to display the AI music creation process exceeds preset duration, the mobile phone displays the 5^{th} cutting interface.

In this way, the user can perceive a process in which the mobile phone is creating the AI music, so that use experience of the user can be improved.

Optionally, after the mobile phone displays the 5^{th} cutting interface, the mobile phone may further display a 6^{th} cutting interface in response to a tap operation on a 4^{th} interface element.

The 4^{th} interface element may be an interface element corresponding to the 3^{rd} music material control included in the 5^{th} cutting interface.

It should be understood that one of purposes of performing the tap operation on the 4^{th} interface element is to trigger switching of the AI music used as the background music of the cutting material, for example, switching from the AI created music 2 to the AI created music 3. In some other embodiments, the tap operation may be replaced with another operation, for example, inputting a voice instruction by the user. This is not limited in this embodiment of this application.

In a possible implementation, the mobile phone displays the 6^{th} cutting interface in response to the tap operation on the 4^{th} interface element. The 6^{th} cutting interface includes at least one music material control, the 5^{th} cutting interface does not include the music material control, and the music material control corresponds to AI music. In other words, compared with the 5^{th} cutting interface, the 6^{th} cutting interface undergoes switching of a music material control corresponding to AI music.

It should be understood that in this implementation, the mobile phone may switch the background music of the cutting material to a plurality of pieces of background music, for example, the AI created music 1 and the AI created music 2, in response to a trigger operation on one touch area, for example, the tap operation on the 2^{nd} music material control or the tap operation on the 4^{th} music material control. In other words, the electronic device may provide different background music for cutting. In this way, the user can switch to different background music for the cutting material by using one touch area in the cutting interface, so that convenience of replacing background music for a video by the electronic device can be improved.

For example, with reference to FIG. 11A and FIG. 11B, the mobile phone displays a 6^{th} cutting interface 1110 in response to the tap operation on the 3^{rd} music material control 1102a. The 6^{th} cutting interface 1110 includes a cutting material 1111, a music material control 1112, and a play control 1114. The music material control 1112 includes a 4^{th} music material control 1112a, a 1^{st} local music material control 1112b, a 2^{nd} local music material control 1112c, and a 3^{rd} local music material control 1112d. The 4^{th} music material control 1112a is in a selected state, and a relative location of the 4^{th} music material control 1112a in the 6^{th} cutting interface 1110 is the same as a relative location of the 3^{rd} music material control in the 5^{th} cutting interface. The 4^{th} music material control 1112a is configured to display AI music, and enable the user to set background music of the cutting material 1111 to AI music corresponding to the 4^{th} music material control 1112a. For example, the 4^{th} music material control displays the AI music by using a preset icon (cover). For another example, the 4^{th} music material control displays the AI music by using a text description "AI created music 3".

In some embodiments, the template-default music may be referred to as first background music, the AI created music 2 may be referred to as second background music, and the AI created music 3 may be referred to as third background music.

It should be noted that because the user triggers, by using the 4^{th} interface element, switching of the AI music used as the background music of the cutting material, the cutting material 1111 may be replayed in the 6^{th} cutting interface, for example, the cutting material 1111 starts to be played from 00:00. Correspondingly, a progress bar of the play control 1114 starts from 00:00. In addition, the background music of the cutting material 1111 is the AI created music 3 corresponding to the 4^{th} music material control.

After the mobile phone displays the 6^{th} cutting interface, the mobile phone may further display the 3^{rd} cutting interface, for example, the 3^{rd} cutting interface 910 shown in FIG. 9A and FIG. 9B, in response to a tap operation on the 4^{th} music material control included in the 6^{th} cutting interface. In this way, the mobile phone implements cyclic switching of the AI music in the cutting interface, so that the user can flexibly switch the AI music used for the cutting material, thereby improving use experience of the user.

It should be noted that after the mobile phone displays the 6^{th} cutting interface, the mobile phone may further display more other cutting interfaces. Specifically, this may be determined based on an actual use requirement, for example, determined based on a preset quantity of pieces of AI music. A display process and a display interface thereof are similar to those in the foregoing descriptions. In the following embodiments of this application, an example in which the preset quantity of pieces of AI music is three and the three pieces of AI music are, for example, the AI generated music 1, the AI generated music 2, and the AI generated music 3 is used for description. It may be understood that in an actual application, the preset quantity may be larger or smaller, for example, two, five, or eight. Specifically, the preset quantity may be set based on an actual use requirement. This is not limited in this embodiment of this application.

In some embodiments, the preset quantity may also be referred to as a first quantity.

In still another possible implementation, the 6^{th} cutting interface may further include a back option and an OK option. The back option enables the user to trigger an operation of returning to a previous-level interface (for example, the 1^{st} cutting interface). The OK option is used to trigger an operation of saving the background music of the cutting material in a current interface. It may be understood that not only the 6^{th} cutting interface may further include back information and the OK option. Correspondingly, the 3^{rd} cutting interface, the 4^{th} cutting interface, or the 5^{th} cutting interface may also include the back option and the OK option.

The following briefly describes the back option and the OK option by using the 6^{th} cutting interface as an example.

Optionally, the 6^{th} cutting interface 1110 further includes a back option 1116a and an OK option 1116b. The mobile phone displays the 1^{st} cutting interface in response to a tap operation on the back option 1116a, and the background music of the cutting material is the template-default music. The mobile phone displays the 1^{st} cutting interface in response to a tap operation on the OK option 1116b, and the background music of the cutting material is the AI created music 3 corresponding to the 4^{th} music material control. In other words, the OK option may be used to save a background music replacement of the cutting material in a current interface displayed on the mobile phone, and the back option does not save the background music replacement of the cutting material in the current interface displayed on the mobile phone. It may be understood that a similar operation may also be performed on the back option and the OK option that are included in the 3^{rd} cutting interface, the 4^{th} cutting interface, or the 5^{th} cutting interface. Details are not described again in this application.

In some embodiments, after the user triggers the tap operation on the back option, the mobile phone may further record a music material control in the current interface. Then the mobile phone displays the 1^{st} cutting interface. Subsequently, in response to the tap operation on the 1^{st} interface element, the mobile phone displays an interface including the music material control recorded by the mobile phone.

In other words, in these embodiments, the mobile phone may remember display content in the interface displayed on the mobile phone before the user triggers the back option. In this way, the user can relatively flexibly use the cutting interface displayed on the mobile phone, so that use experience of the user can be improved.

In a possible implementation, in response to the tap operation on the back option, the mobile phone uses the music material control included in the current interface as a target music material control, and the mobile phone displays the 1^{st} cutting interface. Then the mobile phone displays a target cutting interface in response to the tap operation on the 1^{st} interface element. The target cutting interface is a cutting interface including the target music material control.

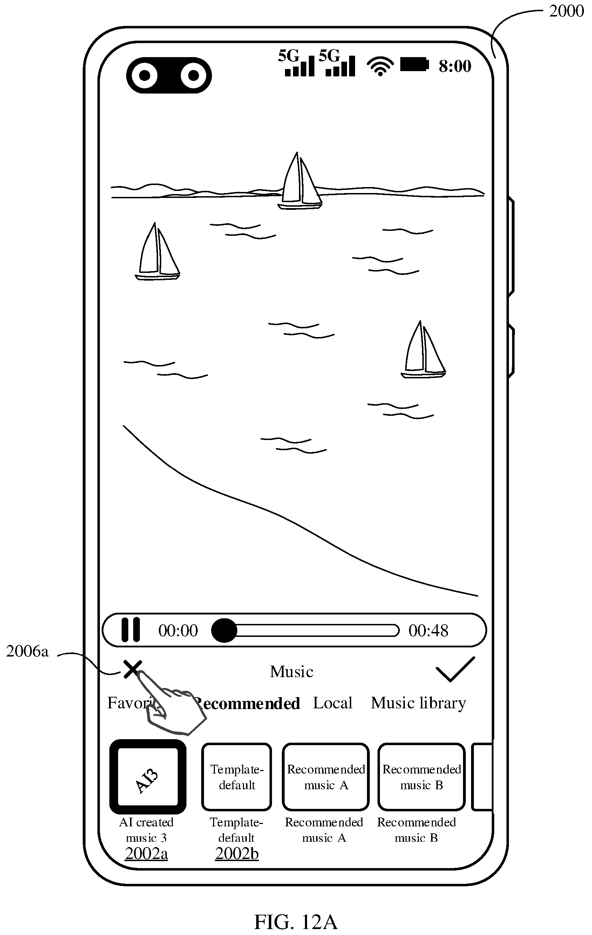

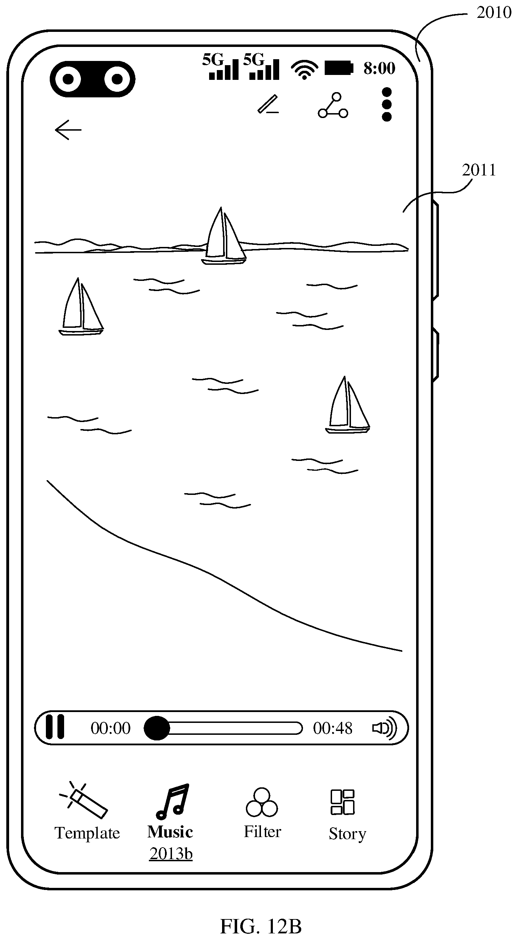

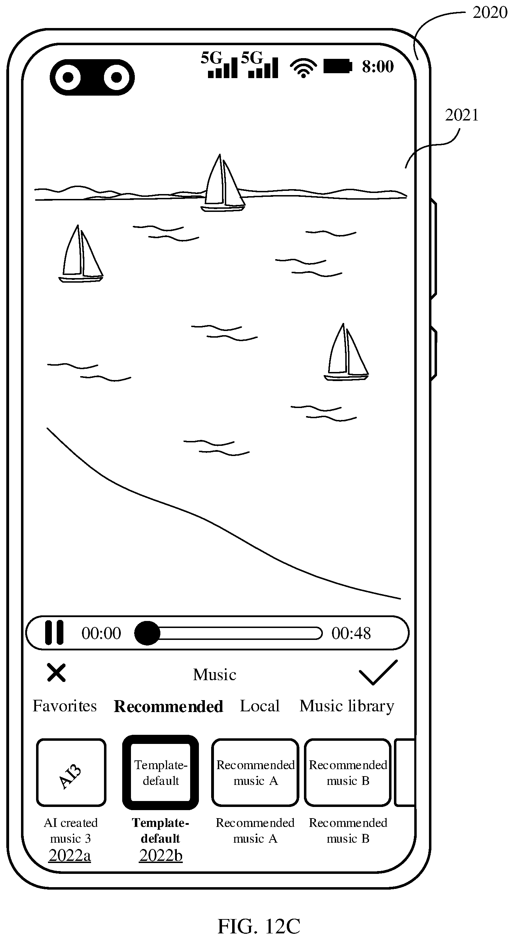

For example, with reference to FIG. 12A, FIG. 12B, and FIG. 12C, the mobile phone displays a 6^{th} cutting interface 2000, and the 6^{th} cutting interface 2000 includes a 4^{th} music material control 2002a, a 1^{st} local music material control 2002b, and a back option 2006a. Then, in response to a tap operation on the back option 2006a, the mobile phone records the 4^{th} music material control 2002a, and displays a 1^{st} cutting interface 2010. In other words, the mobile phone uses the 4^{th} music material control 2002a as the target music material control. The 1^{st} cutting interface 2010 includes a music option 2013b. The 1^{st} cutting interface 2010 further includes a cutting material 2011, and background music of the cutting material 2011 is template-default music corresponding to the 1^{st} local music material control 2002b.

Then, in response to a tap operation on the music option 2013b, the mobile phone displays the target cutting interface including the target music material control, in other words, the mobile phone displays the 6^{th} cutting interface 2020. The 6^{th} cutting interface 2020 includes a 4^{th} music material control 2022a, namely, the target music material control. The 6^{th} cutting interface 2020 further includes a 1^{st} local music material control 2022b and a cutting material 2021. The 1^{st} local music material control 2022b is in a selected state, and background music of the cutting material 2021 is template-default music corresponding to the 1^{st} local music material control 2022b.

In some other embodiments, the 1^{st} cutting interface may further include an exit button. The mobile phone displays the "highlights" option menu of the Gallery application in response to a tap operation on the exit button. Then, if the user opens the 1^{st} cutting interface again, the mobile phone may perform the foregoing steps S401-S404 again.

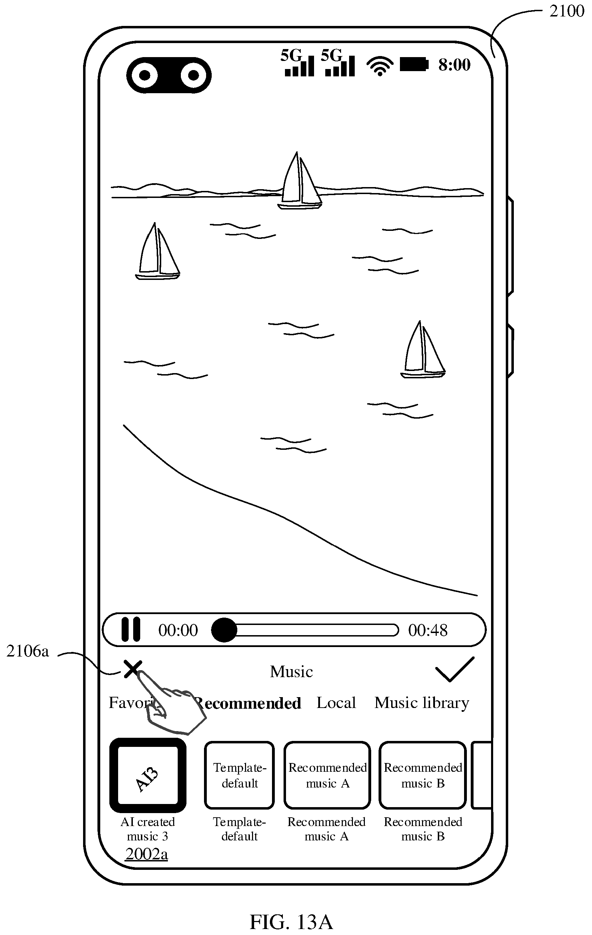

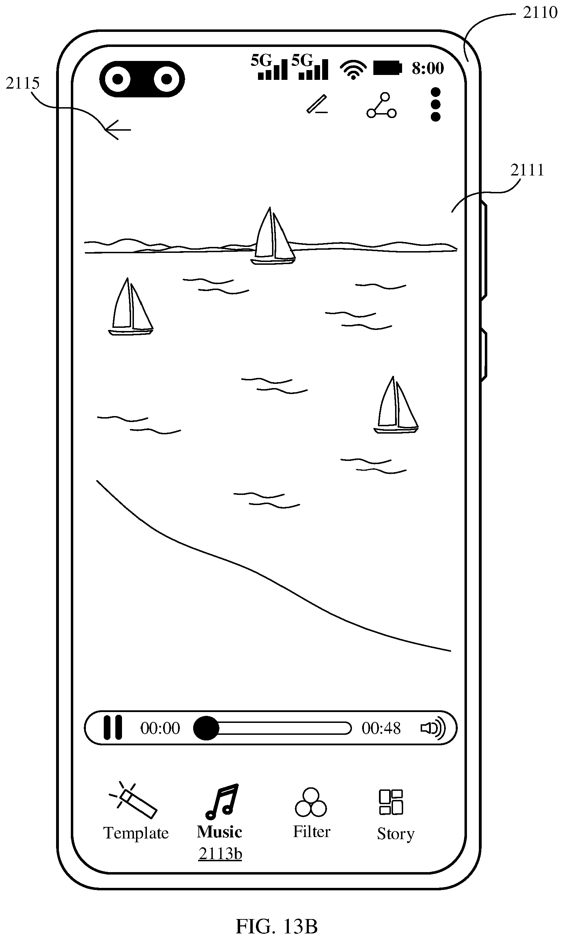

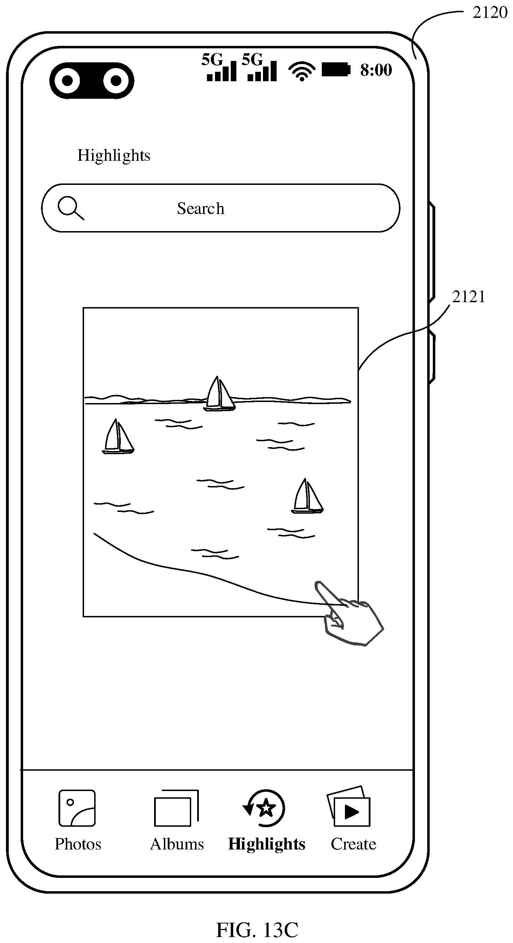

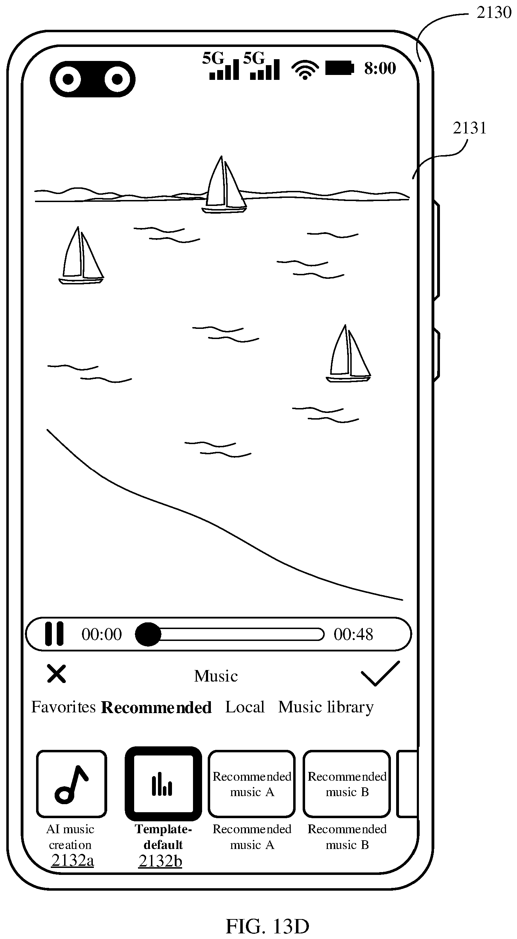

For example, with reference to FIG. 13A, FIG. 13B, FIG. 13C, and FIG. 13D, the mobile phone displays a 6^{th} cutting interface 2100, and the 6^{th} cutting interface 2100 includes a back option 2106a. Then the mobile phone displays a 1^{st} cutting interface 2110 in response to a tap operation on the back option 2106a. The 1^{st} cutting interface 2110 includes an exit button 2115. Then the mobile phone displays a "highlights" option menu 2120 of the Gallery application in response to a tap operation on the exit button 2115. The "highlights" option menu 2120 of the Gallery application includes a thumbnail 2121 of the cutting material. Then the mobile phone displays the 1^{st} cutting interface 2110 in response to a tap operation on the thumbnail 2121 of the cutting material. The 1^{st} cutting interface 2110 includes a music option 2113b. Then the mobile phone displays a 2^{nd} cutting interface 2130 in response to a tap operation on the music option 2113b. The 2^{nd} cutting interface 2130 includes a first local music material control 2132b and a cutting material 2131. The first local music material control 2132b is in a selected state, and background music of the cutting material 2131 is template-default music corresponding to the first local music material control 2132b. Then, if the user triggers again, by tapping the 2^{nd} interface element (for example, a 1^{st} music material control 2132a included in the 2^{nd} cutting interface 2130), the mobile phone to display a 3^{rd} cutting interface, the mobile phone sends the AI generation request again, in other words, the mobile phone (the cloud) generates the AI music again by using the AI music model.

In some embodiments, AI music corresponding to the 3^{rd} music material control, AI music corresponding to the 2^{nd} music material control, and AI music corresponding to the 4^{th} music material control may be generated by the mobile phone (the cloud) at a time, or may be separately generated by the mobile phone (the cloud).

For example, the 4^{th} music material control corresponds to the AI created music 3, the 3^{rd} music material control corresponds to the AI created music 2, and the 2^{nd} music material control corresponds to the AI created music 1. The AI created music 1, the AI created music 2, and the AI created music 3 may all be generated by the mobile phone (the cloud) based on the AI music generation request in step S402, in other words, the mobile phone (the cloud) generates a plurality of pieces of AI music at a time.

For another example, the AI created music 1 may be generated by the mobile phone (the cloud) based on the AI music generation request in step S402, the AI created music 2 may be generated again by the mobile phone (the cloud) based on the AI music generation request in step S403, and the AI created music 3 may be generated again by the mobile phone (the cloud) based on the AI music generation request after the foregoing tap operation on the 4^{th} interface element, in other words, the mobile phone (the cloud) separately generates a plurality of pieces of AI music.

In a scenario in which the mobile phone (the cloud) generates a plurality of pieces of AI music at a time, because after the mobile phone displays the 3^{rd} cutting interface, the mobile phone has obtained a plurality of pieces of AI music, in other words, has obtained the foregoing preset quantity of pieces of AI music, subsequently, the mobile phone does not display the network connection pop-up window even if the mobile phone is disconnected from the network.

In a scenario in which the mobile phone (the cloud) separately generates a plurality of pieces of AI music, if the network status of the mobile phone is network disconnected after the mobile phone displays the 3^{rd} cutting interface or the 5^{th} cutting interface, the mobile phone displays the network connection pop-up window. The network connection pop-up window is configured to provide, for the user, the prompt that the mobile phone is disconnected from the network. If the network status of the mobile phone is network disconnected after the mobile phone displays the 6^{th} cutting interface, the mobile phone does not display the network connection pop-up window. In other words, the mobile phone determines, based on the network status and the quantity of pieces of AI music obtained by the mobile phone, whether to display the network connection pop-up window.

It should be understood that in the scenario in which the mobile phone (the cloud) separately generates a plurality of pieces of AI music, the mobile phone switches the background music of the cutting material in response to a tap operation on the second music option. In other words, the mobile phone switches to different background music for the cutting material based on a quantity of times of performing a selection operation on the second music option. In this case, when the quantity of times of switching background music by using the selection operation on the second music option reaches the first quantity, the mobile phone may perform switching of the background music even if the mobile phone is disconnected from the network. In other words, when the mobile phone meets a first condition, the mobile phone plays the cutting material with the second background music in response to the selection operation on the second music option. The first condition includes: the mobile phone is connected to the network; or the first condition includes: the mobile phone is disconnected from the network, and the quantity of times of switching background music in response to the selection operation on the second music option reaches the first quantity.

For example, with reference to FIG. 11A and FIG. 11B again, after the mobile phone displays the 5^{th} cutting interface 1100, in response to the tap operation on the 3^{rd} music material control 1102a, the mobile phone displays an interface with the network connection pop-up window based on the network status of the mobile phone being network disconnected. For the interface with the network connection pop-up window, refer to the foregoing descriptions corresponding to FIG. 10A, FIG. 10B, FIG. 10C, and FIG. 10D. Then the mobile phone displays the 5^{th} cutting interface 1100 in response to the tap operation on the 6^{th} option included in the network connection pop-up window. The cutting material included in the 5^{th} cutting interface 1100 is played in succession.

For another example, with reference to FIG. 11A and FIG. 11B again, after the mobile phone displays the 6^{th} cutting interface 1110, in response to the tap operation on the 3^{rd} music material control 1102a, based on the network status of the mobile phone being network disconnected and based on the mobile phone having displayed the preset quantity (for example, the preset quantity is three) of pieces of AI music, the mobile phone does not display the interface with the network connection pop-up window, and the mobile phone displays the 3^{rd} cutting interface. That the mobile phone has displayed the preset quantity of pieces of AI music may mean that the mobile phone has displayed, by using the 3^{rd} cutting interface, the AI created music 1 corresponding to the 2^{nd} music material control, the mobile phone has displayed, by using the 5^{th} cutting interface, the AI created music 2 corresponding to the 3^{rd} music material control, and the mobile phone has displayed, by using the 6^{th} cutting interface, the AI created music 3 corresponding to the 4^{th} music material control.

Optionally, the mobile phone may further perform step S405 after performing step S404.

S405: The mobile phone displays a 7^{th} cutting interface in response to a sliding operation on a 5^{th} interface element.

The 5^{th} interface element may include an interface element corresponding to a local music material control in the 5^{th} cutting interface 1100 shown in FIG. 11A and FIG. 11B, for example, the 1^{st} local music material control 1102b, the 2^{nd} local music material control 1102c, or the 3^{rd} local music material control 1102d.

It should be understood that one of purposes of performing the sliding operation on the 5^{th} interface element is to trigger the mobile phone to display more local music material controls. In some other embodiments, the sliding operation may be replaced with another operation, for example, inputting a voice instruction by the user. This is not limited in this embodiment of this application.

In a possible implementation, in response to the sliding operation on the 5^{th} interface element, a display location of the 5^{th} interface element varies with a real-time location of the sliding operation. Then the mobile phone displays the 7^{th} cutting interface in response to the end of the sliding operation. The 7^{th} cutting interface includes at least one music material control, the 5^{th} cutting interface does not include the music material control, and the music material control corresponds to local music. In other words, compared with the 5^{th} cutting interface, the 7^{th} cutting interface undergoes switching of a music material control corresponding to local music. The end of the sliding operation may mean that the user stops touching the screen of the mobile phone, in other words, a hand of the user leaves the screen.

In this implementation, the user may switch between a plurality of pieces of local music by using the sliding operation, so that the user can flexibly switch local music for the cutting material.

It should be noted that in this embodiment of this application, switching of AI music is performed by using the tap operation, and switching of local music is performed by using the sliding operation. In other words, the user performs switching of AI music and local music in different manners. In addition, a display location of a music material control corresponding to AI music does not vary with a real-time touch location of the sliding operation, in other words, the music material control corresponding to the AI music may be fixedly displayed in the cutting interface. In this way, it can be convenient for the user to trigger, in the cutting interface, background music of the music material control to be replaced with AI music. In addition, it can be convenient for the user to compare a cutting material whose background music is AI music with a cutting material whose background music is local music.

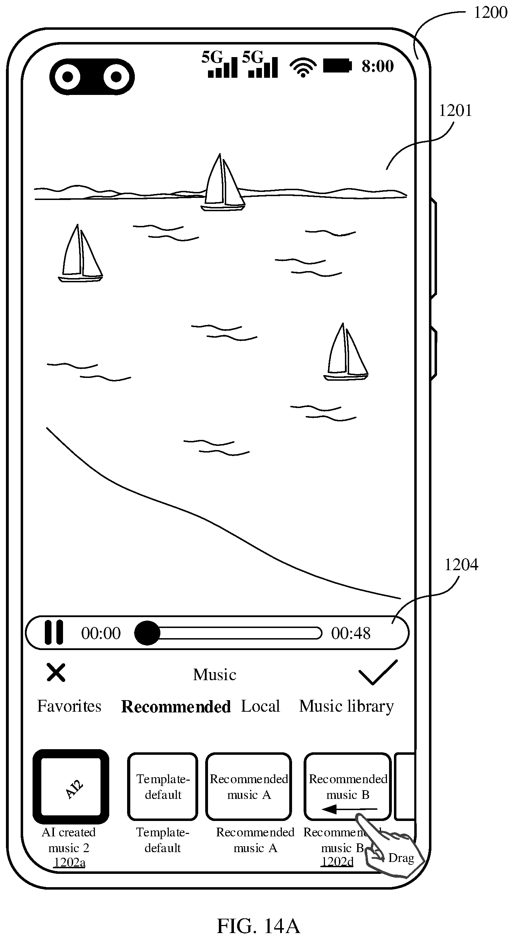

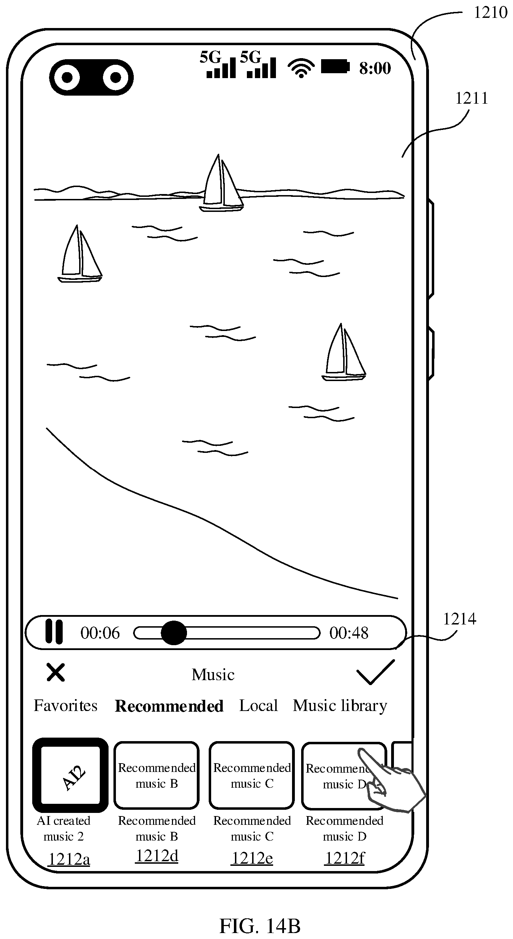

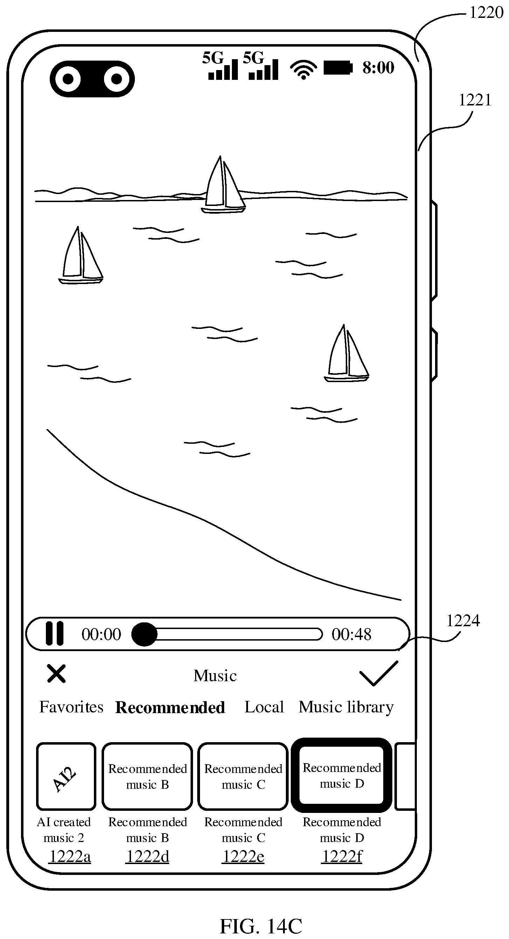

For example, with reference to FIG. 14A, FIG. 14B, and FIG. 14C, the mobile phone displays a 5^{th} cutting interface 1200. The 5^{th} cutting interface 1200 includes a 3^{rd} music material control 1202a and a 3^{rd} local music material control 1202d. The 3^{rd} music material control 1202a is in a selected state. In response to a drag operation on the 3^{rd} local music material control 1202d, a display location of the 3^{rd} local music material control 1202d varies with an implementation touch location of the drag operation. Then the mobile phone displays a 7^{th} cutting interface 1210 in response to the end of the drag operation on the 3^{rd} local music material control 1202d.

It should be noted that in a process in which the display location of the 3^{rd} local music material control 1202d varies with the touch location of the drag operation, a display location of the 3^{rd} music material control 1202a is fixed, and the selected state of the 3^{rd} music material control 1202a also remains unchanged. For example, in the 5^{th} cutting interface 1200 shown in FIG. 14A, FIG. 14B, and FIG. 14C, the display location of the 3^{rd} music material control 1202a is fixed.

With reference to FIG. 14A, FIG. 14B, and FIG. 14C again, the 7^{th} cutting interface 1210 may include a cutting material 1211, a 3^{rd} local music material control 1212d, a 4^{th} local music material control 1212e, a 5^{th} local music material control 1212f, a 3^{rd} music material control 1212a, a play control 1214, and the like. The 3^{rd} music material control 1212a is in a selected state, and the cutting material 1211 in the 7^{th} cutting interface 1210 and the cutting material 1201 in the 5^{th} cutting interface 1200 are played in succession. Correspondingly, the play control 1214 in the 7^{th} cutting interface 1210 corresponds to the play control 1204 in the 5^{th} cutting interface. In addition, background music of the cutting material 1211 is the 3^{rd} music material control 1212a.

Optionally, after step S405, the user may further trigger, by using the 7^{th} cutting interface displayed on the mobile phone, the background music of the cutting material to be replaced with local music, for example, recommended music D.

Optionally, after step S405, the background music replacement method may further include step S406.

S406: The mobile phone displays an 8^{th} cutting interface in response to a tap operation on a 6^{th} interface element.

It should be understood that one of purposes of performing the tap operation on the 6^{th} interface element is to trigger the mobile phone to switch the background music of the cutting material to local music. In some other embodiments, the tap operation may be replaced with another operation, for example, inputting a voice instruction by the user. This is not limited in this embodiment of this application.

In some embodiments, the 6^{th} interface element may also be referred to as a first music option.

The tap operation on the 6^{th} interface element may include the 3^{rd} local music material control 1212d, the 4^{th} local music material control 1212e, or the 5^{th} local music material control 1212f shown in FIG. 14A, FIG. 14B, and FIG. 14C. The 8^{th} cutting interface differs from the 7^{th} cutting interface in a music material control in a selected state and the background music of the cutting material.

For example, with reference to FIG. 14A, FIG. 14B, and FIG. 14C again, the mobile phone displays the 7^{th} cutting interface 1210. The mobile phone displays the 8^{th} cutting interface 1220 in response to a tap operation on the 5^{th} local music material control 1212f. In the 8^{th} cutting interface 1220, a 5^{th} local music material control 122f is in a selected state. The 8^{th} cutting interface 1220 may include a cutting material 1221, a 3^{rd} local music material control 1222d, a 4^{th} local music material control 1222e, the 5^{th} local music material control 1222f, a 3^{rd} music material control 1222a, a play control 1224, and the like. All of the 3^{rd} local music material control 1222d, the 4^{th} local music material control 1222e, and the 5^{th} local music material control 1222f correspond to local music material controls. The 3^{rd} music material control 1222a corresponds to AI music, and for example, the 5^{th} local music material control 1222f corresponds to the recommended music D. In addition, the cutting material 1221 in the 8^{th} cutting interface 1220 is replayed. Correspondingly, the play control 1224 in the 8^{th} cutting interface 1220 is also in a replaying state. In addition, background music of the cutting material 1221 is the recommended music D corresponding to the 5^{th} local music material control 1222f.

Then the background music replacement method provided in the embodiments of this application is further described by using some embodiments.

In some embodiments, the user may enter the deep cutting interface by using deep cutting 634a in the 1^{st} cutting interface 630, and perform more comprehensive and rich cutting on the cutting material by using the deep cutting interface.

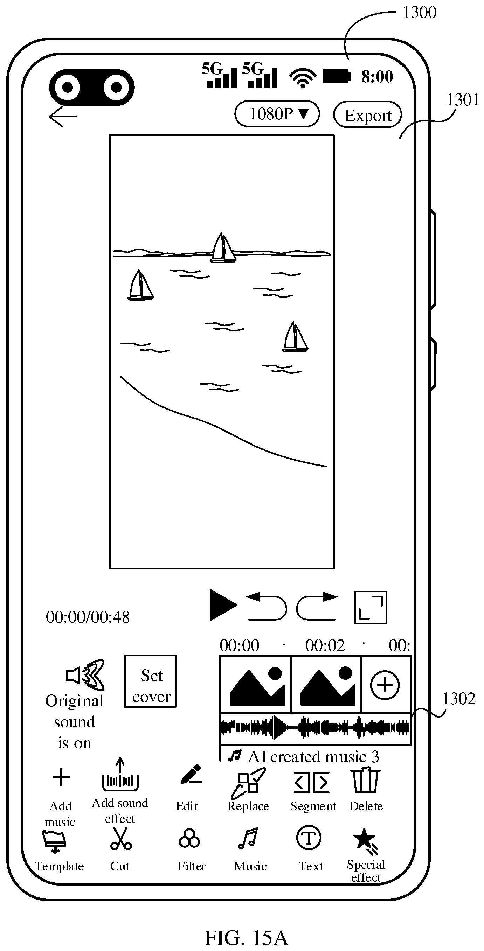

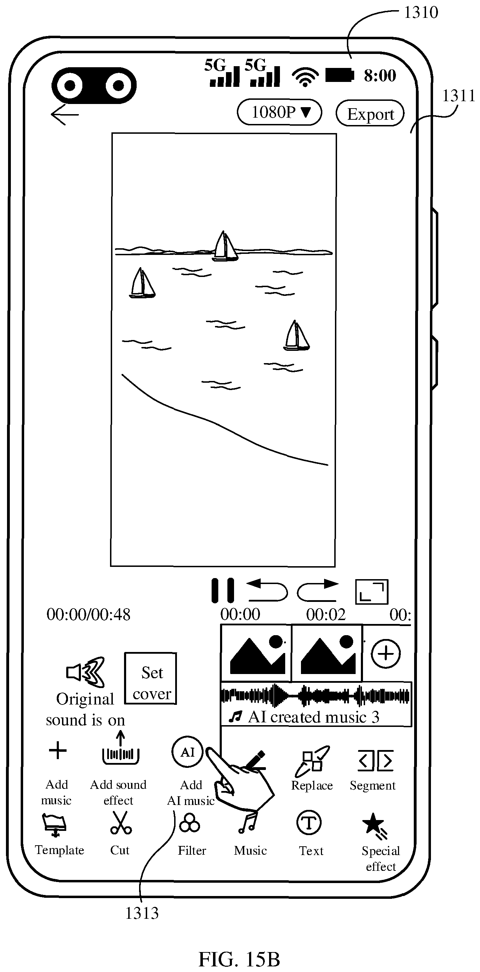

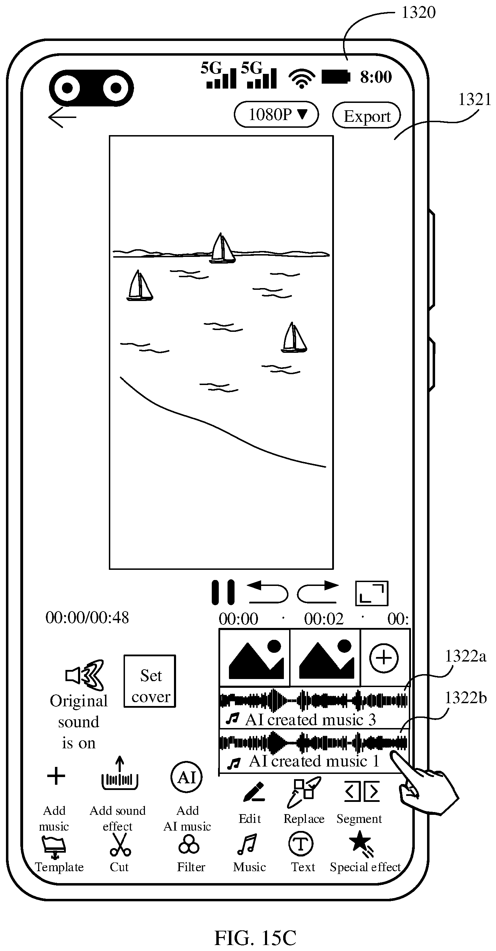

For example, with reference to FIG. 6A, FIG. 6B, FIG. 6C, and FIG. 6D and FIG. 11A and FIG. 11B, the mobile phone displays the 6^{th} cutting interface 1110. The mobile phone displays the 1^{st} cutting interface 630 in response to the tap operation on the OK option 1116b. In other words, the user triggers editing of the cutting material to be saved. In this case, the background music of the cutting material is the AI music, for example, the AI created music 3, corresponding to the 4^{th} music material control 1112a in the 6^{th} cutting interface 1110. Then, with reference to FIG. 6A, FIG. 6B, FIG. 6C, and FIG. 6D and FIG. 15A, FIG. 15B, and FIG. 15C, the mobile phone displays a 1^{st} deep cutting interface 1300 in response to the tap operation on deep cutting 634a. The 1^{st} deep cutting interface 1300 includes a cutting material 1301 and a music progress bar 1302. The cutting material 1301 is in a paused state, for example, pauses at 00:00. In addition, if the cutting material 1301 is played, background music played for the cutting material 1301 is the AI music, for example, the AI created music 3, corresponding to the 4^{th} music material control. In addition, the music progress bar 1302 corresponds to the background music of the cutting material. For example, the music progress bar 1302 corresponds to the AI created music 3. Specifically, a waveform graph shown in the music progress bar 1302 corresponds to a waveform graph of the AI created music 3, or a text description included in the music progress bar is "AI created music 3" or the like.

It should be understood that there may alternatively be a different design for the deep cutting interface. For example, with reference to FIG. 15A, FIG. 15B, and FIG. 15C again, the mobile phone displays a 2^{nd} deep cutting interface 1310 in response to the tap operation on deep cutting. The 2^{nd} deep cutting interface 1310 includes a cutting material 1311 and an add AI music option 1313. The cutting material 1311 may be in a playing state. In other words, when the mobile phone displays the 2^{nd} deep cutting interface, the cutting material 1311 is automatically played. The add AI music option 1313 may be used to trigger AI music to be added to the cutting material 1311. For example, the mobile phone displays a 3^{rd} deep cutting interface 1320 in response to a tap operation on the add AI music option 1313. The 3^{rd} deep cutting interface 1320 includes the cutting material 1311, the add AI music option 1313, a 1^{st} music progress bar 1322a, and a 2^{nd} music progress bar 1322b. In other words, compared with the 2^{nd} deep cutting interface 1310, the 3^{rd} deep cutting interface 1320 has an additionally displayed music progress bar corresponding to AI music. The 1^{st} music progress bar 1322a corresponds to AI music, and the 2^{nd} music progress bar 1322b corresponds to AI music. For example, the 1^{st} music progress bar 1322a corresponds to the AI created music 3, and the 2^{nd} music progress bar 1322b corresponds to the AI created music 1. In addition, background music of a cutting material 1321 is the AI created music 3 and the AI created music 1. That "background music of a cutting material 1321 is the AI created music 3 and the AI created music 1" may mean that the AI created music 1 and the AI created music 3 are simultaneously played, or the AI created music 1 and the AI created music 3 are alternately played. For example, the AI created music 1 is played for five seconds, and then the AI created music 3 is played for five seconds.

Then, in response to a tap operation on the 2^{nd} music progress bar 1322b, the mobile phone switches the AI music corresponding to the 2^{nd} music progress bar 1322b, for example, sets the AI music corresponding to the 2^{nd} music progress bar 1322b to the AI created music 2.

In some other embodiments, the user may enter a "create" option menu of the Gallery application by using the Gallery application. Then the user may manage the related user agreement and/or privacy agreement based on the "create" option menu of the Gallery application.

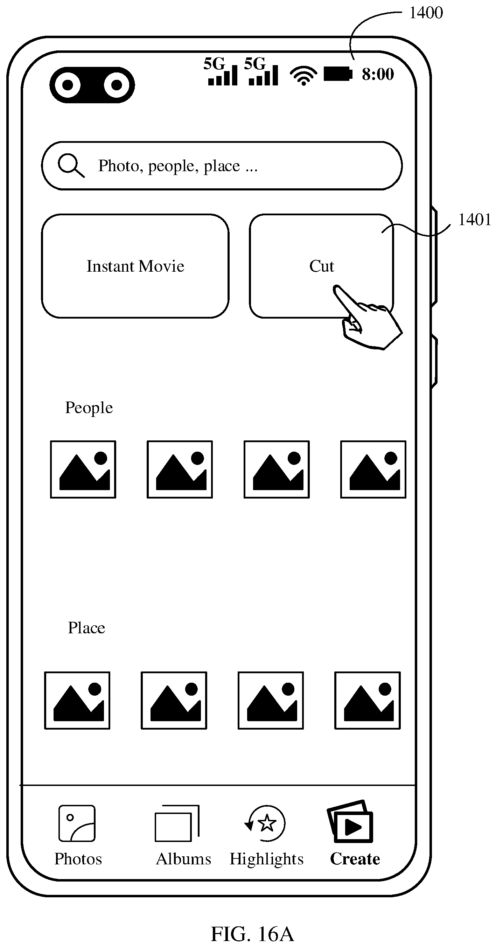

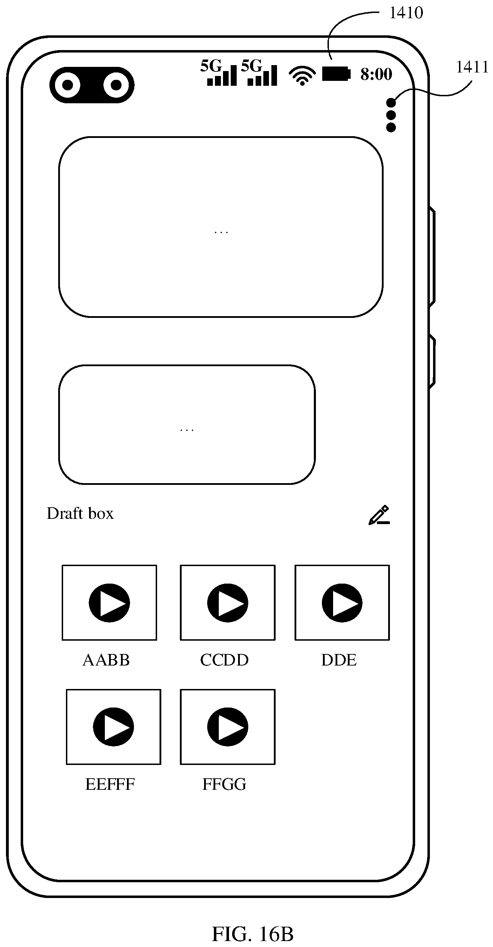

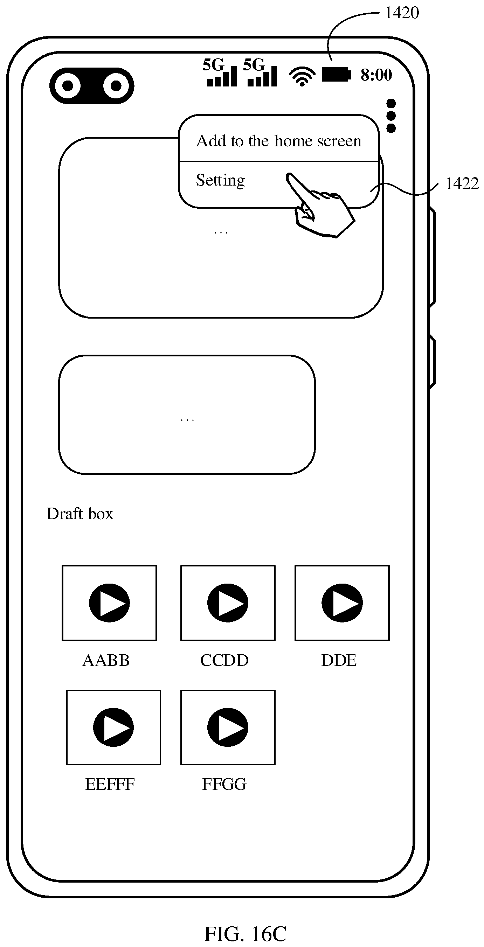

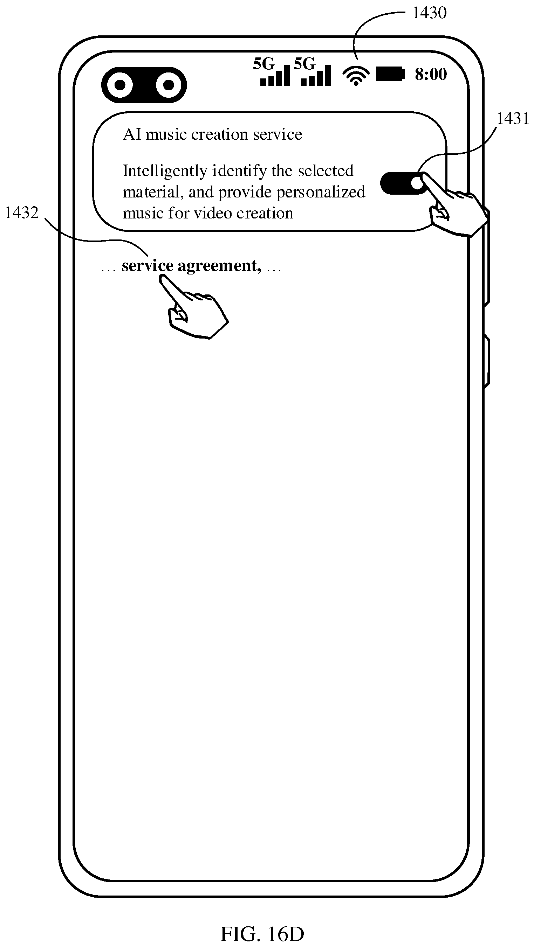

For example, with reference to FIG. 6A, FIG. 6B, FIG. 6C, and FIG. 6D and FIG. 16A, FIG. 16B, FIG. 16C, and FIG. 16D, the mobile phone displays the main interface 610 of the Gallery application. Then the mobile phone displays a "create" option menu 1400 in response to a tap operation on the "create" option button in the main interface of the Gallery application. The "create" option menu 1400 includes a cutting option 1401. The cutting option 1401 is configured to provide management of a cutting function of the Gallery application. Then the mobile phone displays a 1^{st} cutting management interface 1410 in response to a tap operation on the cutting option 1401. The cutting management interface 1410 is configured to manage a cutting draft bin, and is configured to manage some historical cutting results, for example, an AABB cutting result and a CCDD cutting result. The cutting management interface 1410 further includes a more option 1411. In response to a tap operation on the more option 1411, the mobile phone additionally display more information than the cutting management interface 1410, for example, the mobile phone displays a 2^{nd} cutting management interface 1420. The 2^{nd} cutting management interface includes a cutting setting option 1422. The mobile phone displays a cutting setting interface 1430 in response to a tap operation on the cutting setting option 1422. The cutting setting interface 1430 includes a music service toggle 1431 and a service agreement option 1432. A status of the music service toggle 1431 includes an enabled state or a disabled state. The status of the music service toggle 1431 is related to the foregoing agreement flag bit, in other words, is related to whether the user authorizes (signs) the related user agreement and/or privacy agreement. For example, if the agreement flag bit is 1, the status of the music service toggle 1431 is the enabled state; and if the agreement flag bit is 0, the status of the music service toggle 1431 is the disabled state. FIG. 16A, FIG. 16B, FIG. 16C, and FIG. 16D show an example in which the status of the music service toggle 1431 is the enabled state. In response to a tap operation on the music service toggle 1431, the status of the music service toggle 1431 changes to the disabled state. Alternatively, the mobile phone displays an agreement detail interface in response to a tap operation on the service agreement option 1432. For the agreement detail interface, refer to the agreement detail interface 1010 shown in FIG. 10A, FIG. 10B, FIG. 10C, and FIG. 10D. Details are not described herein again.

In some embodiments, the music service toggle may also be referred to as an agreement toggle.

It should be understood that in some scenarios, AI music has time validity, in other words, AI music added to cutting music has time validity. In this case, a status of the AI music function of the mobile phone may be an expired state or an unexpired state. When the status of the AI music function of the mobile phone is the expired state, the mobile phone displays a service stop notification in the cutting interface, and does not display, in the cutting interface, an interface element corresponding to AI music.

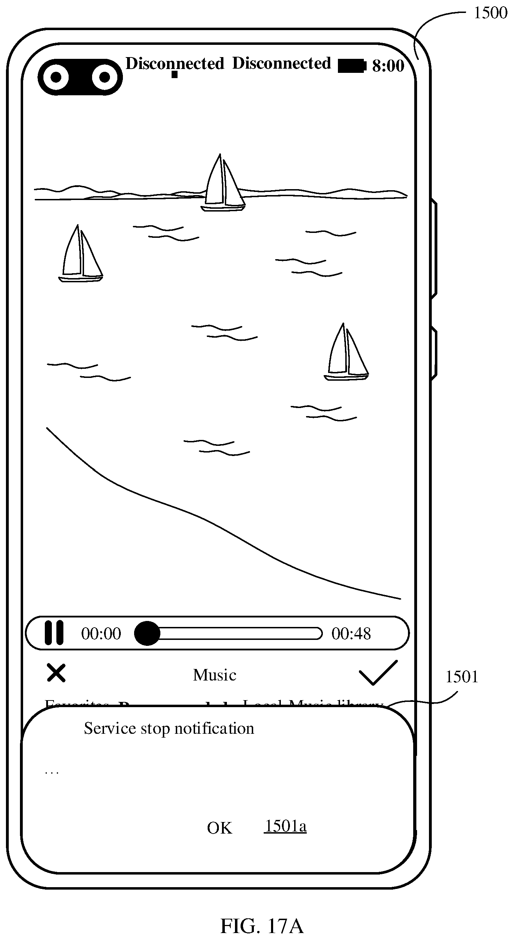

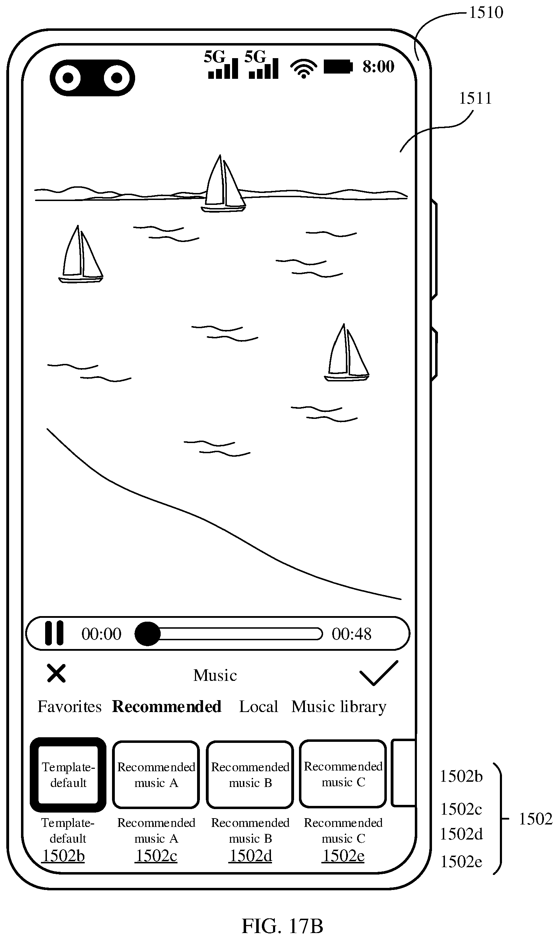

For example, after the cutting material is cut by the user, the background music is the AI created music 2. When the user opens the cutting interface through the process corresponding to FIG. 6A, FIG. 6B, FIG. 6C, and FIG. 6D, a music material control corresponding to the AI created music 2 is in a selected state. For example, the mobile phone displays the 5^{th} cutting interface 1100 shown in FIG. 11A and FIG. 11B. In the 5^{th} cutting interface 1100, the 3^{rd} music material control 1102a is in the selected state, and the background music of the cutting material 1101 is the AI created music 2 corresponding to the 3^{rd} music material control 1102a. Then the mobile phone displays the service stop notification in response to the tap operation on the 3^{rd} music material control 1102a and the status of the AI music function of the mobile phone being the expired state. For example, with reference to FIG. 17A and FIG. 17B, the mobile phone displays an interface 1500 with a service stop notification 1501. The interface 1500 includes the service stop notification 1501, and the service stop notification 1501 includes a 1^{st} option 1501a. The mobile phone displays a 9^{th} cutting interface 1510 in response to a tap operation on the 1^{st} option 1501a. The 9^{th} cutting interface 1510 includes a cutting material 1511 and a music material control 1502. The music material control 1502 includes a music material control corresponding to local music, and does not include a music material control corresponding to AI music. The music material control 1502 includes a 1^{st} local music material control 1502b, a 2^{nd} local music material control 1502c, a 3^{rd} local music material control 1502d, and a 4^{th} local music material control 1502e. The 1^{st} local music material control 1502b is in a selected state, the cutting material 1511 is in a playing state, and played background music is template-default music corresponding to the 1^{st} local music material control 1502b.

It should be noted that personal information used in the technical solutions of this application is only limited to obtaining information of individual consent, including but not limited to notifying and reminding the user of a related user agreement (notification) before the user uses the function, and signing the agreement (authorization) including authorization related user information.

Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

In the embodiments, the electronic device may be divided into functional modules based on the foregoing method examples. For example, each functional module may be obtained through division for each corresponding function, or two or more functions may be integrated into one processing module. The integrated module may be implemented in a form of hardware. It should be noted that division into the modules in the embodiments is an example, and is merely logical function division. In actual implementation, there may be another division manner.

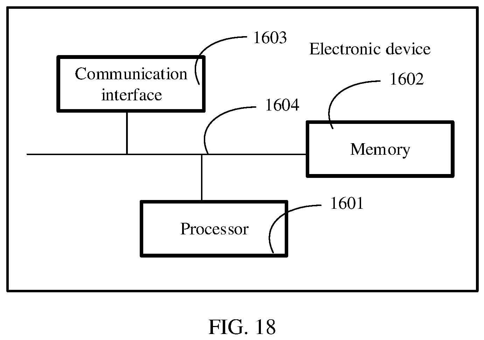

An embodiment of this application further provides an electronic device. As shown in FIG. 18, the electronic device may include one or more processors 1601, a memory 1602, and a communication interface 1603.

The memory 1602, the communication interface 1603, and the processor 1601 are coupled. For example, the memory 1602, the communication interface 1603, and the processor 1601 may be coupled through a bus 1604.

The communication interface 1603 is configured to perform data transmission with another device. The memory 1602 stores computer program code. The computer program code includes computer instructions. When the computer instructions are executed by the processor 1601, the electronic device is enabled to perform the related method steps in the method embodiments of this application.

The processor 1601 may be a processor or a controller, for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content of this disclosure. The processor may alternatively be a combination that implements a computing function, for example, a combination of one or more microprocessors or a combination of a DSP and a microprocessor.

The bus 1604 may be a peripheral component interconnect (peripheral component interconnect, PCI) bus, an extended industry standard architecture (extended industry standard architecture, EISA) bus, or the like. The bus 1604 may be classified into an address bus, a data bus, a control bus, and the like. For ease of representation, only one thick line is used for representation in FIG. 18, but this does not indicate that there is only one bus or one type of bus.

An embodiment of this application further provides a computer-readable storage medium. The computer storage medium stores computer program code. When the foregoing processor executes the computer program code, an electronic device performs the related method steps in the foregoing method embodiments.

An embodiment of this application further provides a computer program product. When the computer program product runs on a computer, the computer is enabled to perform the related method steps in the foregoing method embodiments.

The electronic device, the computer-readable storage medium, or the computer program product provided in this application is configured to perform the corresponding method provided above. Therefore, for beneficial effects that can be achieved by the electronic device, the computer-readable storage medium, or the computer program product, refer to the beneficial effects of the corresponding method provided above. Details are not described herein again.

It can be clearly learned by a person skilled in the art from the foregoing descriptions of the implementations that for convenience and brevity of description, only division into the foregoing functional modules is used as an example for description. In actual application, the foregoing functions may be allocated to different functional modules for implementation based on a requirement, in other words, an internal structure of an apparatus is divided into different functional modules, to complete all or some of the functions described above.

In the several embodiments provided in this application, it should be understood that the disclosed apparatus and method may be implemented in another manner. For example, the apparatus embodiments described above are merely examples. For example, division into modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, in other words, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the technical solutions, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps in the method in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A background music replacement method, wherein the method comprises:
displaying a first cutting interface, and playing a to-be-cut video with first background music in the first cutting interface, wherein the first cutting interface further comprises a music control;
displaying a second cutting interface in response to a first trigger operation on the music control, wherein the second cutting interface comprises a first music option and a second music option, and the first music option indicates the first background music;
playing the to-be-cut video with second background music in response to a selection operation on the second music option;
playing the to-be-cut video with the first background music in response to a selection operation on the first music option; and
playing the to-be-cut video with third background music in response to the selection operation on the second music option, wherein the third background music is different from the second background music.

2. The method according to claim 1, wherein the playing the to-be-cut video with third background music in response to the selection operation on the second music option comprises:
after the to-be-cut video with the second background music is played, when a quantity of times of switching background music in response to the selection operation on the second music option is less than a first quantity, playing the to-be-cut video with the third background music in response to the selection operation on the second music option.

3. The method according to claim 1 or 2, wherein the method further comprises:
after the to-be-cut video with the second background music is played, when the quantity of times of switching background music in response to the selection operation on the second music option is greater than the first quantity, playing the to-be-cut video with the second background music in response to the selection operation on the second music option.

4. The method according to any one of claims 1-3, wherein the method is applied to an electronic device; and
the playing the to-be-cut video with second background music in response to a selection operation on the second music option comprises:
when the electronic device meets a first condition, playing the to-be-cut video with the second background music in response to the selection operation on the second music option, wherein
the first condition comprises:
the electronic device is connected to a network; or
the electronic device is disconnected from the network, and the quantity of times of switching background music in response to the selection operation on the second music option reaches the first quantity.

5. The method according to claim 4, wherein the playing the to-be-cut video with second background music in response to a selection operation on the second music option comprises:
when the electronic device is disconnected from the network, and the quantity of times of switching background music in response to the selection operation on the second music option is less than the first quantity, displaying a network connection prompt in response to the selection operation on the second music option;
establishing a network connection in response to a network connection operation; and
after the electronic device is connected to the network, displaying the second cutting interface, and playing the to-be-cut video with the second background music in the second cutting interface.

6. The method according to claim 5, wherein after the displaying a network connection prompt, the method further comprises:
playing the to-be-cut video with the first background music in the second cutting interface in response to an operation of determining not to connect to the network.

7. The method according to any one of claims 1-6, wherein the second cutting interface further comprises a first back control; and
after the playing the to-be-cut video with third background music in response to the selection operation on the second music option, the method further comprises:
in response to a second trigger operation on the first back control, displaying the first cutting interface, and playing the to-be-cut video with the first background music in the first cutting interface; and
in response to a third trigger operation on the music control, displaying the second cutting interface, and playing the to-be-cut video with the first background music in the second cutting interface.

8. The method according to any one of claims 1-6, wherein the second cutting interface further comprises a saving control; and
after the playing the to-be-cut video with third background music in response to the selection operation on the second music option, the method further comprises:
in response to a fourth trigger operation on the saving control, displaying the first cutting interface, and playing the to-be-cut video with the third background music in the first cutting interface; and
in response to a fifth trigger operation on the music control, displaying the second cutting interface, and playing the to-be-cut video with the third background music in the second cutting interface.

9. The method according to claim 7, wherein the first cutting interface further comprises a second back control; and
after the displaying the first cutting interface in response to a second trigger operation on the first back control, the method further comprises:
displaying a third interface in response to a sixth trigger operation on the second back control, wherein the third interface comprises a cutting entry of the to-be-cut video; and
in response to a seventh trigger operation on the cutting entry, displaying the first cutting interface, and playing the to-be-cut video with the first background music in the first cutting interface.

10. The method according to any one of claims 1-3, wherein the method is applied to an electronic device, and the electronic device comprises an agreement toggle; and
the playing the to-be-cut video with second background music in response to a selection operation on the second music option comprises:
when the agreement toggle is enabled, playing the to-be-cut video with the second background music in response to the selection operation on the second music option.

11. The method according to claim 10, wherein the playing the to-be-cut video with second background music in response to a selection operation on the second music option comprises:
when the agreement toggle is disabled, in response to the selection operation on the second music option, displaying a prompt for enabling the agreement toggle;
enabling the agreement toggle in response to an operation of enabling the agreement toggle; and
after the agreement toggle is enabled, displaying the second cutting interface, and playing the to-be-cut video with the second background music in the second cutting interface.

12. The method according to claim 11, wherein after the displaying a prompt for enabling the agreement toggle, the method further comprises:
playing the to-be-cut video with the first background music in the second editing interface in response to an operation of determining not to enable the agreement toggle.

13. The method according to any one of claims 1-3, wherein the method is applied to an electronic device, and the electronic device comprises an agreement toggle; and
the playing the to-be-cut video with second background music in response to a selection operation on the second music option comprises:
when the electronic device meets a second condition,
in response to the selection operation on the second music option, displaying a prompt for enabling the agreement toggle;
enabling the agreement toggle in response to an operation of enabling the agreement toggle;
displaying a network connection prompt after the agreement toggle is enabled;
establishing a network connection in response to a network connection operation; and
after the electronic device is connected to the network, displaying the second cutting interface, and playing the to-be-cut video with the second background music in the second cutting interface, wherein
the second condition comprises: the electronic device is disconnected from the network, and the agreement toggle is not enabled.

14. The method according to any one of claims 1-3, wherein the second cutting interface further comprises a saving control; and
after the playing the to-be-cut video with third background music in response to the selection operation on the second music option, the method further comprises:
displaying the first cutting interface in response to an eighth trigger operation on the saving control, wherein the first cutting interface further comprises a first editing control;
in response to a ninth trigger operation on the first editing control, displaying a third cutting interface, and playing the to-be-cut video with the third background music and an audio track of the third background music in the third cutting interface, wherein the third cutting interface comprises a third music option; and
in response to a selection operation on the third music option, playing the to-be-cut video with the third background music and the second background music, and displaying an audio track of the second background music in the third cutting interface.

15. The method according to any one of claims 1-3, wherein the playing the to-be-cut video with second background music in response to a selection operation on the second music option comprises:
in response to the selection operation on the second music option, displaying a first music cover and/or a first music name in the second music option, and playing the to-be-cut video with the second background music, wherein the first music cover and/or the first music name indicate or indicates the second background music; and
the playing the to-be-cut video with third background music in response to the selection operation on the second music option comprises:
in response to the selection operation on the second music option, displaying a second music cover and/or a second music name in the second music option, and playing the to-be-cut video with the third background music, wherein the second music cover and/or the second music name indicate or indicates the third background music.

16. An electronic device, wherein the electronic device comprises a processor and a memory, the processor is coupled to the memory, the memory is configured to store computer program code, the computer program code comprises computer instructions, and when the processor executes the computer instructions, the electronic device is enabled to perform the method according to any one of claims 1-15.

17. A computer-readable storage medium, wherein the computer-readable storage medium comprises computer instructions, and when the computer instructions are run on an electronic device, the electronic device is enabled to perform the method according to any one of claims 1-15.
